# EUROPEAN PATENT SPECIFICATION

(11) **EP 4 105 961 B1**
(45) Date of publication and mention of the grant of the patent: **03.09.2025**
(21) Application number: 21753730.7
(22) Date of filing: 12.02.2021
(51) Int. Cl.: H01H 71/00, H01H 71/02, H02H 3/14, H02H 3/32, H01H 83/14

(54) **CIRCUIT BREAKER**
SCHUTZSCHALTER
DISJONCTEUR

(30) Priority: 13.02.2020 CN 202010088449; 13.02.2020 CN 202010092164
(43) Date of publication of application: 21.12.2022
(73) Proprietor: Zhejiang Chint Electrics Co., Ltd., Yueqing, Zhejiang 325603 (CN)
(72) Inventor: ZHOU, Changqing, Yueqing, Zhejiang 325603 (CN); LEI, Guang, Yueqing, Zhejiang 325603 (CN); GU, Xiangyi, Yueqing, Zhejiang 325603 (CN)
(74) Representative: Petraz, Gilberto Luigi
(86) International application number: PCT/CN2021/076632
(87) International publication number: WO 2021/160179

(56) References cited:
- EP-A1- 3 525 227
- CN-A- 110 190 581
- CN-U- 204 167 871
- CN-U- 205 429 697
- CN-U- 205 863 908
- US-A1- 2002 149 462

## Description

### TECHNICAL FIELD

The present invention relates to the technical field of low-voltage electrical appliances, and more particularly to a circuit breaker.

### BACKGROUND ART

A residual current operated circuit breaker, as important electrical protection equipment, is mainly used to detect a residual current and compare the residual current value with a reference value. When the residual current value exceeds the reference value, a main circuit contact is disconnected from a mechanical switch appliance. When a personal electric shock current or a grid leakage current exceeds a specified value, the residual current operated circuit breaker can quickly cut off a faulty power supply within a very short time to protect the safety of people and electrical equipment, and at the same time protect a circuit from an overload or short circuit fault.

The traditional residual current operated circuit breaker usually uses a current transformer to monitor a leakage current generated when an L/N wire is unbalanced, which is generally realized by arranging a zero-sequence transformer. The zero-sequence transformer is relatively large in size, resulting in a large volume of a product. In particular, current breakers of a plurality of residual current protection types for a sinusoidal AC residual current, a pulsating DC residual current, a smooth DC residual current, a composite residual current, a pulsating DC residual current superimposed with a smooth DC residual current, an AC residual current superimposed with a smooth DC residual current, a high-frequency sinusoidal AC residual current and the like are provided. Due to a complex circuit principle and a large size of a circuit board, components such as a differential current fault detector, an electromagnetic trip relay and a tripping mechanism are relatively large in volume. Due to the large volume of an integrated structure, it is usually made into a residual current operated circuit breaker or a residual current operated protection module without overcurrent protection, which is then matched or assembled with the circuit breaker to form a complete protection mode. Such a split structure will also lead to a relatively large product volume and high power consumption caused by a relatively long wire loop, and also lowers a space utilization rate in a box, resulting in higher production cost of the product, which is not conducive to the development trend of the miniaturization of low-voltage electrical appliances.

In existing products there is a circuit breaker designed with two or more current transformers. But in general cases, one of the two transformers is a current transformer for main circuit current detection and measurement, and the other is a residual current transformer for residual current detection. The current transformers in these circuit breakers are usually used to convert a large current in an AC circuit into a certain proportion of small current for measurement and monitoring protection, and monitor an actual current flowing through an L wire. The residual current transformer is used to monitor the leakage current generated when the L/N wire is unbalanced, which is usually realized by arranging a zero-sequence transformer. Therefore, the volume of such product is also very large.

CN-U-205429697 discloses a circuit breaker as in the preamble of claim 1, wherein the electronic residual current detection circuit is not configured to convert the fault signal into a sampling output signal, wherein the sampling circuit is not configured to amplify the received sampling output signal to form a preprocessed signal, and wherein the comparison circuit is not configured to receive the preprocessing signal and compare it with a set threshold.

### SUMMARY OF THE INVENTION

The invention is identified in the appended claims.

An objective of the present invention is to overcome the defects of the prior art and provide a circuit breaker with a simple structure and high reliability.

To achieve the above object, the present invention adopts the following technical solution:
A circuit breaker, comprising an actuator and a residual current analysis and comparison circuit for driving the actuator, the residual current analysis and comparison circuit comprises an electronic detection circuit, an electromagnetic residual current detection circuit and a drive circuit; the electronic detection circuit is connected to an electronic residual current fault monitor for monitoring a smooth DC residual current, a highfrequency sinusoidal AC residual current and a composite residual current and comprises a working power supply and a detection circuit powered by the working power supply; the detection circuit comprises an electronic residual current detection circuit, a processing circuit and a comparison circuit; the electronic residual current detection circuit is used to collect a fault signal and converts the fault signal into a sampling output signal; the processing circuit is used to amplify the received sampling output signal to form a preprocessed signal; the comparison circuit is used to receive the preprocessing signal, compare the preprocessing signal with a set threshold, output a fault signal and control the drive circuit such that the actuator operates the circuit breaker to trip; and the electromagnetic residual current detection circuit is connected to an electromagnetic residual current fault monitor for monitoring a sinusoidal AC residual current and a pulsating DC residual current, and makes the actuator operate the circuit breaker to trip through the output signal;
the circuit breaker comprising an insulating housing, wherein a partition plate is arranged in the insulating housing and divides a space inside the circuit breaker into two parts, i.e., a first mounting groove and a second mounting groove; the first mounting groove and the second mounting groove are used to install a phase pole or a neutral pole of the circuit breaker therein; a residual current analysis driving module which is arranged in parallel on one side of the insulating housing; a residual current detection circuit board is arranged in the residual current analysis driving module, and the residual current analysis and comparison circuit is arranged on the residual current detection circuit board; and the electronic residual current fault monitor and the electromagnetic residual current fault monitor are arranged in the residual current analysis driving module or in the second mounting groove.

Further, in the case that the electronic residual current fault monitor has no power supply voltage, the electromagnetic residual current fault monitor is used to monitor the smooth DC residual current, a highfrequency sinusoidal AC residual current and a composite residual current; and in the case that the electronic residual current fault monitor has a power supply voltage, the electronic residual current fault monitor is used to monitor the sinusoidal AC residual current and a pulsating DC residual current, and the electromagnetic residual current fault monitor does not work at this time.

Further, the working power supply comprises a DC switching power supply; a voltage stabilizing circuit is connected between the DC switching power supply and the residual current analysis and comparison circuit; the DC switching power supply also comprises a rectifier diode, a fuse resistor and a filter circuit, wherein one terminal of the rectifier diode is connected to an L pole of the power supply and the other terminal of the rectifier diode is connected to one terminal of the filter circuit; one terminal of the fuse resistor is connected to an N pole of the power circuit, and the other terminal of the fuse resistor is connected to the filter circuit; an output terminal of the filter circuit is connected to the DC switching power supply; a surge resistor is connected in parallel between the L pole of the power supply and the N pole of the power supply; and the DC switching power supply comprises a DC/DC switching power supply chip, wherein an output terminal of the DC/DC switching power supply chip is connected to the voltage stabilizing circuit.

Further, the electromagnetic residual current detection circuit comprises a capacitor C21, a capacitor C22, a resistor R34, a resistor R36, a resistor R37, a diode D7, a diode D8, an N-MOS field effect transistor Q4 and a controller P1; one terminal of the resistor R36 is connected to the anode VCC of the power supply, and the other terminal of the resistor R36 is connected to one terminal of the resistor R37 and a gate G of the N-MOS field effect transistor Q4; a drain D of the N-MOS field effect transistor Q4 is connected to one terminal of the resistor R35, and a source S of the N-MOS field effect transistor Q4 is connected to the other terminal of the resistor R37 and the other terminal of the resistor R35; one terminal of the resistor R35, which is connected to the drain D of the N-MOS field effect transistor Q4, is connected to a secondary winding output terminal CT1 of an electromagnetic transformer of the electromagnetic residual current fault monitor; one terminal of the resistor R35, which is connected to the source S of the N-MOS field effect transistor Q4, is connected to the other secondary winding output terminal CT2 of the electromagnetic transformer of the electromagnetic residual current fault monitor; an anode of the diode D7 and a cathode of the diode D8 are both connected to an anode of the capacitor C22; a cathode of the diode D7 and an anode of the diode D8 are both connected to an anode of the capacitor C21; the anode of the capacitor C22 is connected to the drain D of the N-MOS field effect transistor Q4; the anode of the capacitor C21 is connected to the source S of the N-MOS field effect transistor Q4 and connected to GND; and a cathode of the capacitor C21 and a cathode of the capacitor C22 are connected to the actuator.

Further, the electronic residual current detection circuit comprises a TVS anti-surge shock protection absorption tube VR2, a triode Q1, a triode Q2, a capacitor C1, a capacitor C2, a capacitor C10, a capacitor C11, a resistor R2, a resistor R2*, a resistor R3, a resistor R4, a resistor R5, a resistor R6, a resistor R10, a resistor R11, a resistor R12, an operational amplifier U1A and an operational amplifier U1B; one terminal of a winding of the electronic residual current fault monitor is connected to one end of the TVS anti-surge shock protection absorption tube VR2, an emitter of the transistor Q1, and an emitter of the triode Q2; the other end of the TVS anti-surge impact protection absorption tube VR2 and the other terminal of the winding of the electronic residual current fault monitor are connected to one terminal of the resistor R2, the other terminal of the resistor R2 is connected to an anode of the capacitor C1, and a cathode of the capacitor C1 is connected to the cathode VSS of the power supply; the other winding of the electronic transformer of the electronic residual current fault monitor 41 is connected to one terminal of the resistor R2* and one terminal of the resistor R3; the other end of the TVS anti-surge shock protection absorption tube VR2 is connected to one terminal of the resistor R2* and one terminal of the resistor R3; the other terminal of the resistor R2* and one terminal of the resistor R1 are connected to the anode of the capacitor C1; the other terminal of the resistor R1 is connected to GND; one terminal of the resistor R3 is connected to the resistor R2*; the other terminal of the resistor R3 is connected to an inverting input terminal of the operational amplifier U1A, and a positive input terminal of the operational amplifier U1A is connected to one terminal of the resistor R4; the other terminal of the resistor R4 is connected to GND; an output terminal of the operational amplifier U1A is connected to one terminal of the resistor R6, and the other terminal of the resistor R6 is connected to a base of the triode Q1 and a base of the triode Q2; a collector of the triode Q1 is connected to the anode VCC of the power supply, and a collector of the triode Q2 is connected to the cathode VSS of the power supply; an inverting input terminal of the operational amplifier U1B is connected to an output terminal LD of the operational amplifier U1B; a positive input terminal of the operational amplifier U1B is connected to one terminal of the resistor R12 and one terminal of the capacitor C11; the other terminal of the capacitor C11 is connected to GND; the other terminal of the resistor R12 is connected to one terminal of the resistor R11 and one terminal of the capacitor C10; the other terminal of the capacitor C10 is connected to one terminal of the resistor R10 and one terminal of the resistor R5; the other terminal of the resistor R5 is connected to GND through the resistor R4; the other terminal of the resistor R10 is connected to GND through the resistor R11; and two terminals of the capacitor C2 are connected in parallel to two terminals of the resistor R6.

Further, the processing circuit comprises an operational amplifier U2A, a capacitor C12, a capacitor C13, a resistor R13 and a resistor R14, wherein a positive input terminal of the operational amplifier U2A is connected to one terminal of the resistor R14 and one terminal of the capacitor C13; an output terminal Lw of the operational amplifier U2A and one terminal of the capacitor C12 are both connected to an inverting input terminal of the operational amplifier U2A; the other terminal of the resistor 14 and the other terminal of the capacitor C12 are both connected to one terminal of the resistor R13; the other terminal of the resistor R13 is connected to an output terminal of the electronic residual current detection circuit; and the other terminal of the capacitor C13 is grounded.

Further, the comparison circuit comprises an operational amplifier U3A, an operational amplifier U3B, a diode D1, a diode D2, a resistor R15, a resistor R16, a resistor R17, a resistor R18 and a resistor R19; a positive input terminal of the operational amplifier U3A is grounded, and an inverting input terminal of the operational amplifier U3A is connected to one terminal of the resistor R15, one terminal of the resistor R16 and a cathode of the diode D1; an output terminal of the operational amplifier U3A is connected to an anode of the diode D1 and a cathode of the diode D2; a positive output terminal of the operational amplifier U3B is connected to GND, and an inverting input terminal of the operational amplifier U3B is connected to one terminal of the resistor R17, one terminal of the resistor R18 and one terminal of the resistor R19; an output terminal QL of the operational amplifier U3B is connected to the other terminal of the resistor R19; an anode of diode D2 and the other terminal of the resistor R16 are connected to the other terminal of the resistor R18; and the other terminal of the resistor R15 and the other terminal of the resistor R17 are connected to an output terminal of the processing circuit.

Further, the drive circuit comprises an operational amplifier U4A, an operational amplifier U4B, a resistor R21, a resistor R27, a resistor R28, a resistor R28T, a resistor R29, a resistor R29T, a resistor R30, a resistor R31, a resistor R32, a resistor R33, a resistor R34, an adjustable resistor VR1, a capacitor C20 and a triode Q3; a positive input terminal of the operational amplifier U4A is connected to one terminal of the capacitor C16 and one terminal of the resistor R21; an output terminal of the operational amplifier U4A is connected to an anode of the diode D5; the other terminal of the resistor R21 is connected to an output terminal of the comparison circuit; one terminal of the resistor R29T and one terminal of the resistor R29 are connected to the anode VCC of the power supply; the other terminal of the resistor R29T is connected to an inverting input terminal of the operational amplifier U4A and one terminal of the resistor R28T; the other terminal of the resistor R29 is connected to an inverting input terminal of the operational amplifier U4A and one terminal of the resistor R28; the other terminal of the resistor R28T and the other terminal of the resistor R28 are connected to a collector of the triode Q3; an emitter of the triode Q3 is connected to the cathode VSS of the power supply; one terminal of the resistor R33 is connected to the anode VCC of the power supply, and the other terminal of the resistor R33 is connected to a cathode of the adjustable resistor VR1; an anode of the adjustable resistor VR1 is connected to one terminal of the resistor R34 and a base of the triode Q3; the other terminal of the resistor R34 is connected to the cathode VSS of the power supply; an inverting input terminal of the operational amplifier U4B is connected to GND; an output terminal of the operational amplifier U4B is connected to an anode of the diode D6; a cathode of the diode D6 is connected to the actuator through the resistor R32; a positive input terminal of the operational amplifier U4B is connected to one terminal of the resistor R30; the other terminal of the resistor R30 is connected to one terminal of the resistor R27, one terminal of the resistor R31 and one terminal of the capacitor C20; the other terminal of the resistor R27 is connected to a cathode of the diode D5; and the other terminal of the resistor R31 and the other terminal of the capacitor C20 are connected to the cathode VSS of the power supply.

Further, the processing circuit further comprises a voltage reference circuit which is used when a power grid supplies a voltage; the voltage reference circuit comprises an operational amplifier U2B, a resistor R7, a resistor R8, a capacitor C3 and a capacitor C4; a positive input terminal of the operational amplifier U2B is connected to one terminal of the resistor R8, one terminal of the resistor R9 and one terminal of the capacitor C4; an output terminal of the operational amplifier U2B and one terminal of the resistor R7 are connected to an inverting output terminal of the operational amplifier U2B; one terminal of the capacitor C3 is connected to the other terminal of the resistor R7 and connected to GND; the other terminal of the capacitor C3 is connected to the cathode VSS of the power supply; the other terminal of the resistor R8 and the other terminal of the capacitor C4 are connected to the cathode VSS of the power supply; and the other terminal of the resistor R9 is connected to the anode VCC of the power supply.

Further, a width of the residual current driving module is one-third of a total width of the circuit breaker; and the width of the first mounting groove and the second mounting groove is equal.

Further, a phase pole of the circuit breaker is mounted in the first mounting groove; a neutral phase of the circuit breaker, the electronic residual current fault monitor, the electromagnetic residual current fault monitor, an electromagnetic relay and a tripping mechanism that can be triggered by the electromagnetic relay are mounted in the second mounting groove.

Further, the phase poles of the circuit breaker are both mounted in the first mounting groove and the second mounting groove; and the electronic residual current fault monitor, the electromagnetic residual current fault monitor, and the electromagnetic relay are arranged in the residual current analysis driving module.

Further, the phase pole of the circuit breaker comprises a pair of phase wire terminals and a phase circuit structure electrically connected to the phase wire terminals; the pair of phase wire terminals are respectively used as an upstream phase wire terminal and a downstream phase wire terminal and are arranged oppositely on both sides of the first mounting groove, and the phase circuit structure is arranged in the first mounting groove between the upstream phase wire terminal and the downstream phase wire terminal; the phase circuit structure comprises a phase pole handle, a phase pole operating mechanism, a phase pole moving contact, an electromagnetic release, a thermal release and an arc extinguishing chamber; the phase pole handle and the phase pole operating mechanism are arranged on the upper part of the first mounting groove; the phase pole handle is connected to the phase pole operating mechanism through a phase pole connecting rod; the phase pole moving contact is connected to the lower part of the operating mechanism and is electrically connected to the thermal release and the upstream phase wire terminal; the electromagnetic release is fixed on one side of the phase pole operating mechanism and is located below the phase pole handle; a phase pole static contact matched with the phase pole moving contact is fixed on one side of the electromagnetic release close to the phase pole moving contact; the thermal release is arranged below the phase pole operating mechanism; and the arc extinguishing chamber is arranged below the electromagnetic release.

Further, the neutral pole of the circuit breaker comprises a pair of neutral wire terminals and a neutral wire circuit structure electrically connected to the neutral wire terminals; the pair of neutral wire terminals are respectively used as an upstream neutral wire terminal and a downstream neutral wire terminal and are arranged oppositely on both sides of the second mounting groove, and the neutral wire circuit structure is arranged in the second mounting groove between the upstream neutral wire terminal and the downstream neutral wire terminal; the neutral wire circuit structure comprises a neutral wire handle, a neutral wire moving contact assembly, an electromagnetic relay, an electronic residual current fault monitor and an electromagnetic residual current fault monitor; the neutral wire handleand the tripping mechanism are arranged on the upper part of the second mounting groove; the neutral wire handle is coupled with the phase pole handle and is connected to the tripping mechanism through a neutral wire connecting rod; the tripping mechanism is connected to the phase pole operating mechanism; the electromagnetic relay is arranged on one side of the tripping mechanism and below the neutral wire handle; the electronic residual current fault monitor and the electromagnetic residual current fault monitor are arranged side by side below the electromagnetic relay; and a neutral wire static contact that cooperates with the neutral wire moving contact mechanism is arranged on one side of the electronic residual current fault monitor and the electromagnetic residual current fault monitor.

According to the circuit breaker of the present invention, a residual current analysis and comparison circuit arranged in a residual current analysis driving module includes two types of residual current analysis and detection circuits, i.e., an electronic residual current detection circuit and an electromagnetic residual current detection circuit, and the electronic residual current detection circuit and the electromagnetic residual current detection circuit can work together without interfering with each other, which is beneficial to the optimization and miniaturization of a circuit board.

In addition, by replacing the existing residual current fault monitor having a large volume with the electromagnetic residual current fault monitor and the electronic residual current fault monitor, the thickness of the residual current fault monitors is reduced. In the case that a product has no power supply voltage, the electromagnetic residual current fault monitor is used to detect a sinusoidal AC residual current and a pulsating DC residual current; and in the case that the product has a power supply voltage, the electronic residual current fault monitor is used to monitor residual currents such as a smooth DC residual current, a high-frequency sinusoidal AC residual current and a composite residual current. At this time, the electromagnetic residual current fault monitor does not work. Therefore, compared with the existing circuit breaker, the circuit breaker of the present invention not only has a more complete function of detecting the residual current, but also performs different detection tasks respectively, which is beneficial to the optimization of the circuit board and the reduction of the layout design and thus conducive to the miniaturization of the entire product.

### BRIEF DESCRIPTION OF THE DRAWINGS

FIG. 1 is a schematic structural diagram of a circuit breaker of the present invention;
FIG. 2 is a first schematic structural diagram of the circuit breaker of the present invention;
FIG. 3 is a second schematic structural diagram of the circuit breaker of the present invention;
FIG. 4 is a schematic structural diagram of a phase pole of the circuit breaker of the present invention;
FIG. 5 is a schematic structural diagram of a neutral pole of the circuit breaker of the present invention;
FIG. 6 is a schematic diagram of a residual current analysis and comparison circuit of the circuit breaker of the present invention;
FIG. 7 is a circuit diagram of a working power supply of an electronic detection circuit in the circuit breaker of the present invention;
FIG. 8 is a diagram of an electronic residual current detection circuit in the circuit breaker of the present invention;
FIG. 9 illustrates a processing circuit (filtering processing after sampling) of a detection circuit in the circuit breaker of the present invention;
FIG. 10 illustrates a voltage reference circuit in the circuit breaker of the present invention;
FIG. 11 illustrates a comparison circuit of the detection circuit in the circuit breaker of the present invention;
FIG. 12 illustrates a drive circuit in the circuit breaker of the present invention;
FIG. 13 illustrates an electromagnetic residual current detection circuit in the circuit breaker of the present invention; and
FIG. 14 14 is a circuit diagram (controller) of an actuator in the circuit breaker of the present invention.

### DETAILED DESCRIPTIONOF THE PREFERRED EMBODIMENTS

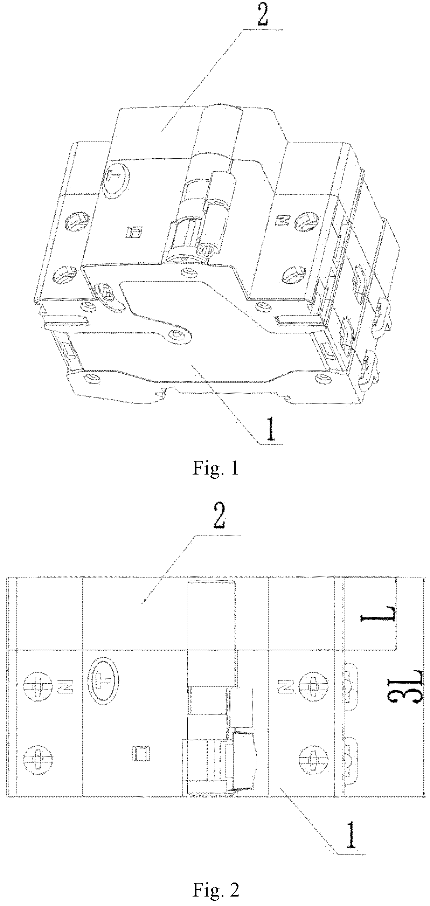

The specific implementation of the circuit breaker of the present invention will be further described below with reference to the embodiments given in FIGS. 1 to 14. The circuit breaker of the present invention is not limited to the description of the following embodiments.

A circuit breaker includes an insulating housing 1, wherein a partition plate is arranged in the insulating housing 1 and divides a space inside the circuit breaker into two parts, i.e., a first mounting groove and a second mounting groove; the first mounting groove and the second mounting groove are used to install a phase pole or a neutral pole of the circuit breaker therein; and a residual current analysis driving module 2 which is integrally formed with the insulating housing 1 is arranged in parallel on one side of the insulating housing 1.

As shown in FIGS. 1 to 3, a circuit breaker includes an insulating housing 1, wherein a phase pole and a neutral pole of the circuit breaker are arranged inside the insulating housing 1; a partition plate is arranged between the phase pole and the neutral pole and divides the interior of the insulating housing 1 into a phase pole mounting groove and a neutral pole mounting groove; and a residual current analysis driving module 2 which is integrally formed with the insulating housing 1 is arranged on one side inside the insulating housing 1. The residual current analysis driving module 2, the phase pole of the circuit breaker, and the neutral pole of the circuit breaker are arranged in parallel with each other. The residual current analysis driving module 2 is located on one side adjacent to the phase pole mounting groove or one side adjacent to the neutral pole mounting groove. In FIG. 1 and FIG. 2, the residual current analysis driving module 2 is arranged on one side adjacent to the neutral pole mounting groove. Of course, the residual current analysis driving module 2 may also be arranged on one side adjacent to the phase pole mounting groove as shown in FIG. 2.

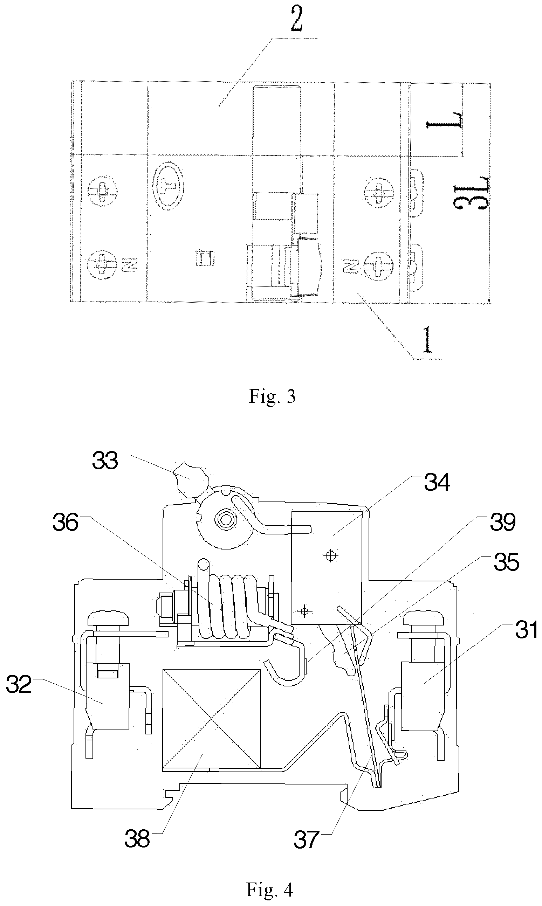

In order to save the space, it is preferable that the spaces occupied by the phase pole, the neutral pole and the residual current analysis driving module inthe insulating housing 1 are the same. As shown in FIGS. 1 to 3, the phase pole, the neutral pole and the residual current analysis driving module each occupy one-third of the entire space of the circuit breaker. As shown in FIG. 2 and FIG. 3, L represents a width, such that the phase pole, the neutral pole and the residual current analysis driving module are respectively a modulus, or approximately a modulus, which is convenient for standardized and modular production. However, the thickness of a mutual transformer of a residual current fault monitor 4 of the existing circuit breaker is too thick, and thus it is impossible to achieve that the phase pole, the neutral pole and the residual current analysis driving module each occupy one-third of the entire space of the circuit breaker no matter whether the residual current fault monitor 4 is mounted in the neutral pole or the residual current analysis driving module.

An improvement of the circuit breaker of the present invention lies in that: the residual current fault monitor 4 includes an electronic residual current fault monitor 41 and an electromagnetic residual current fault monitor 42, which are arranged inside the residual current analysis driving module 2 or inside the second mounting groove serving as a neutral pole. By replacing the existing residual current fault monitor having a large volume with the two residual current fault monitors, the thickness of the residual current fault monitors becomes smaller; and when the residual current fault monitors are placed inside the residual current analysis driving module 2 or inside the second mounting groove serving as the neutral pole, the residual current analysis driving module 2 of the present invention can only occupy one-third of the total width of the circuit breaker, such that the phase pole and the neutral pole each occupy one-third of the total width of the circuit breaker, which is convenient for standardized and modular production. Therefore, the width of the first mounting groove, the width of the second mounting groove and the width of the residual current analysis driving module 2 in the insulating housing 1 of the circuit breaker are respectively a modulus, or approximately a modulus.

The residual current fault monitor 4 includes an electromagnetic residual current fault monitor 42 and an electronic residual current fault monitor 41. In the case that a product has no power supply voltage, the electromagnetic residual current fault monitor 42 is used to detect a sinusoidal AC residual current and a pulsating DC residual current; and in the case that the product has a power supply voltage (AC/DC85 to 265V), the electronic residual current fault monitor 41 is used to monitor residual currents such as a smooth DC residual current, a high-frequency sinusoidal AC residual current and a composite residual current. At this time, the electromagnetic residual current fault monitor 42 does not work. According to the circuit breaker of the present invention, a large residual current fault detector is replaced with the electromagnetic residual current fault monitor 42 and the electronic residual current fault monitor 41, such that they can be integrated inside the neutral pole, i.e., the second mounting groove or placed inside the residual current analysis driving module to execute different detection tasks respectively, which is beneficial to the optimization of the circuit board and the reduction of the layout design, etc., and thus beneficial to the miniaturization of the entire product. Therefore, the width of the entire product is reduced to 54 mm, forming a B-type 1PN or 2P RCBO with a relatively small width.

As shown in FIGS. 4 to 5, in Embodiment 1 of the circuit breaker of the present invention, the first mounting groove and the second mounting groove are respectively regarded as a phase pole mounting groove and a neutral pole mounting groove for installing the phase pole and the neutral pole of the circuit breaker inside. A residual current analysis driving module 2 which is integrally formed with the insulating housing 1 is arranged on one side of the insulating housing 1. A residual current detection circuit board is arranged inside the residual current analysis driving module 2. The electromagnetic residual current fault monitor 42 and the electronic residual current fault monitor 41 are arranged in the neutral pole mounting groove of the neutral pole. As Embodiment 2 of the circuit breaker of the present invention, the first mounting groove and the second mounting groove are respectively regarded as the phase pole mounting groove and the neutral pole mounting groove for installing the phase pole and the neutral pole of the circuit breaker inside. A residual current analysis driving module 2 which is integrally formed with the insulating housing 1 is arranged on one side of the insulating housing 1. A residual current detection circuit board, an electromagnetic residual current fault monitor 42 and an electronic residual current fault monitor 41 are arranged inside the residual current analysis driving module 2.

As Embodiment 3 of the circuit breaker of the present invention, the first mounting groove and the second mounting groove are both used for installing the phase poles of the circuit breaker inside to form a two-pole circuit breaker. A residual current analysis driving module 2 which is integrally formed with the insulating housing 1 is arranged on one side of the insulating housing 1. A residual current detection circuit board, an electromagnetic residual current fault monitor 42, an electronic residual current fault monitor 41 and an electromagnetic relay 5 are arranged inside the residual current analysis driving module 2.

As shown in FIG. 4, in Embodiment 1 of the circuit breaker of the present invention, the phase pole of the circuit breaker includes a pair of phase wire terminals and a phase circuit structure electrically connected to the phase wire terminals; the pair of phase wire terminals are respectively used as an upstream phase wire terminal 31 and a downstream phase wire terminal 32 and are arranged oppositely on both sides of the phase pole mounting groove, and the phase circuit structure is arranged in the phase pole mounting groove between the upstream phase wire terminal 31 and the downstream phase wire terminal 32; the phase circuit structure includes a phase pole handle 33, a phase pole operating mechanism 34, a phase pole moving contact 35, an electromagnetic release 36, a thermal release 37 and an arc extinguishing chamber 38; the phase pole handle 33 and the phase pole operating mechanism 34 are arranged on the upper part of the phase pole mounting groove; the phase pole handle 33 is connected to the phase pole operating mechanism 34 through a phase pole connecting rod; the phase pole moving contact 35 is connected to the lower part of the operating mechanism and is electrically connected to the thermal release 37 and the upstream phase wire terminal 31; the electromagnetic release 36 is fixed on one side of the phase pole operating mechanism 34 and is located below the phase pole handle 33; a phase pole static contact 39 matched with the phase pole moving contact 35 is fixed on one side of the electromagnetic release 36 close to the phase pole moving contact 35; the thermal release 37 is arranged below the phase pole operating mechanism 34; and the arc extinguishing chamber 38 is arranged below the electromagnetic release 36.

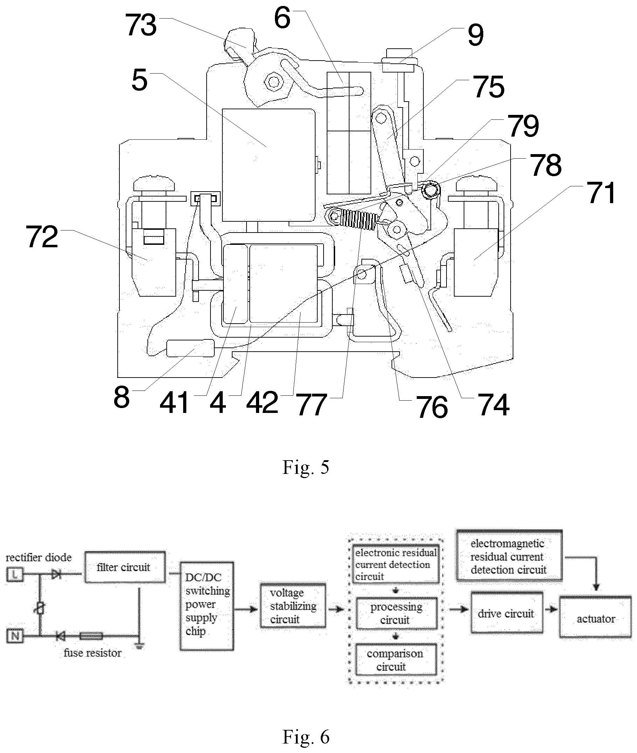

As shown in FIG. 5, an electronic residual current fault monitor 41, an electromagnetic residual current fault monitor 42, an electromagnetic relay 5 and a tripping mechanism 6 that can be triggered by the electromagnetic relay 5 are also arranged in the neutral pole mounting groove. The neutral pole of the circuit breaker includes a pair of neutral wire terminals and a neutral wire circuit structure electrically connected to the neutral wire terminals. The pair of neutral wire terminals are respectively used as an upstream neutral wire terminal 71 and a downstream neutral wire terminal 72 and are arranged oppositely on both sides of the neutral pole mounting groove, and the neutral wire circuit structure is arranged in the neutral pole mounting groove between the upstream neutral wire terminal 71 and the downstream neutral wire terminal 72. The neutral wire circuit structure includes a neutral wire handle 73, a neutral wire moving contact assembly, an electromagnetic relay 5, an electronic residual current fault monitor 41 and an electromagnetic residual current fault monitor 42; and none of the arc extinguishing chamber 38, the electromagnetic release 36 and the thermal release 37 are arranged in the neutral pole mounting groove. The neutral wire handle 73 and the tripping mechanism 6 are arranged on the upper part of the neutral pole mounting groove. The neutral wire handle 73 is coupled with the phase pole handle 33 and is connected to the tripping mechanism 6 through a neutral wire connecting rod. The tripping mechanism 6 is connected to the phase pole operating mechanism 34. The electromagnetic relay 5 is arranged on one side of the tripping mechanism 6 and below the neutral wire handle 73. When the electromagnetic relay 5 actuates, the phase pole operating mechanism 34 in the phase pole mounting groove is tripped through the tripping mechanism 6. The electronic residual current fault monitor 41 and the electromagnetic residual current fault monitor 42 are arranged side by side below the electromagnetic relay 5. A neutral wire static contact 76 that cooperates with the neutral wire moving contact assembly is arranged on one side, close to the neutral wire moving contact assembly, of the electronic residual current fault monitor 41 and the electromagnetic residual current fault monitor 42.

The electronic residual current fault monitor 41 and the electromagnetic residual current fault monitor 42 each include a phase pole primary winding connected to a phase pole circuit, a neutral pole primary winding connected to a neutral pole circuit, and a secondary winding connected to the residual current detection circuit board. For example, both ends of each of the phase pole primary windings of the electronic residual current fault monitor 41 and the electromagnetic residual current fault monitor 42 pass through the partition plate and are electrically connected to the electromagnetic release 36 of the phase pole of the circuit breaker and the downstream phase wire terminal 32 respectively. Both ends of each of the neutral pole primary windings of the electronic residual current fault monitor 41 and the electromagnetic residual current fault monitor 42 are electrically connected to the neutral wire static contact 76 and the downstream neutral wire terminal 72 respectively.

The neutral wire moving contact assembly includes a neutral wire moving contact 74, a driving arm 75, a bracket and a contact pressure spring 77. The neutral wire moving contact 74 and the bracket are coaxially mounted on the lower part of the driving arm 75, and the neutral wire moving contact 74 is electrically connected to the upstream neutral wire terminal 71. The driving arm 75 and the phase pole operating mechanism 34 are connected through a hinged shaft to form mechanical coupling. The phase pole operating mechanism 34 drives the phase pole moving contact 35 and the neutral wire moving contact 74 to move. One end of the contact pressure spring 77 is fixed on a fixed shaft 78 in the insulating housing 1, and the other end of the contact pressure spring 77 is connected to the neutral wire moving contact 74.

Specifically, the neutral wire circuit structure also includes a residual current test circuit. The residual current test circuit includes a downstream phase wire terminal 32, a spring 79, a resistor 8, a test button 9, a contact pressure spring 77 and a fixed shaft 78 thereof, wherein the contact pressure spring 77 and the fixed shaft 78 thereof are conductive elements of the residual current test circuit. A first end of the spring 79 is electrically connected to the downstream neutral wire terminal 72 through the resistor 8, and a second end of the spring 79 is detachably in contact with the fixed shaft 78. The test button 9 is mounted on the upper part of the neutral pole mounting groove. When the test button 9 is pressed, the second end of the spring 79 is in contact with the fixed shaft 78, and a residual circuit is generated to test whether the circuit breaker can trip normally.

As Embodiment 2, of course, the electronic residual current fault monitor 41, the electromagnetic residual current fault monitor 42 and the electromagnetic relay 5, which are arranged in the neutral pole mounting groove, can also be arranged in the residual current analysis driving module 2, as long as it is ensured that the electromagnetic relay 5 can reset automatically when the electromagnetic relay 5 emits a tripping instruction. At this time, the tripping mechanism 6 that can be triggered by the electromagnetic relay 5 and the neutral pole of the circuit breaker are arranged in the neutral pole mounting groove. The neutral pole of the circuit breaker includes a pair of neutral wire terminals and a neutral wire circuit structure electrically connected to the neutral wire terminals. The neutral wire circuit structure includes a neutral wire handle 73, a neutral wire moving contact assembly and an electromagnetic relay 5. The neutral wire handle 73 and the tripping mechanism 6 are arranged on the upper part of the neutral pole mounting groove. The neutral wire handle 73 is connected to the tripping mechanism 6 through a neutral wire connecting rod. The neutral wire handle 73 is coupled with the phase pole handle 33 and is connected to the tripping mechanism 6 through the neutral wire connecting rod. The tripping mechanism 6 is connected to the phase pole operating mechanism 34. The neutral wire moving contact assembly is arranged on one side of the tripping mechanism 6. The neutral wire static contact 76 that cooperates with the neutral wire moving contact assembly is fixedly arranged in the neutral pole mounting groove.

The phase pole handle 33 is pushed, and the phase pole connecting rod drives the phase pole operating mechanism 34 to rotate clockwise, so that the phase pole moving contact 35 moves toward the phase pole static contact 39. At the same time, the phase pole operating mechanism 34 makes the driving arm 75 drive the neutral wire moving contact 74 to move toward the neutral wire static contact 76 through the hinge shaft. After the phase pole handle 33 is pushed so that the phase pole moving contact 35 and the phase pole static contact 39, as well as the neutral wire moving contact 74 and the neutral wire static contact 76 are respectively in a closed position, the tripping mechanism 6 can also complete the energy storage and self-locking. When the phase pole moving contact 35 and the phase pole static contact 39, as well as the neutral wire moving contact 74 and the neutral wire static contact 76 are respectively in the closed position, the thermal release 37 or the electromagnetic release 36 in the phase circuit structure will automatically actuate if there is an overload or short-circuit fault in the circuit, such that the phase pole operating mechanism 34 trips; and if the phase pole moving contact 35 and the phase pole static contact 39, as well as the neutral wire moving contact 74 and the neutral wire static contact 76 are separated to cut off a fault current, the tripping mechanism 6 will not actuate. If a residual current in the circuit reaches a threshold or the test button 9 is pressed to push the second end of the spring 79 to contact the fixed shaft 78 to form a test current, the electromagnetic relay 5 actuates to unlock the tripping mechanism 6; and the stored energy is released to drive the phase pole operating mechanism 34 to be quickly unlocked, so that the phase pole moving contact 35 is separated from the phase pole static contact 39, and the neutral wire moving contact 74 is separated from the neutral wire static contact 76.

As another embodiment of the tripping mechanism 6, the tripping mechanism 6 may be a transmission rod acting on a lock latch of the phase pole operating mechanism 34. The transmission rod passes through the partition plate and corresponds to the lock latch of the phase pole operating mechanism 34. When the electromagnetic relay 5 actuates, the phase pole operating mechanism 34 is tripped through the tripping mechanism 6.

Of course, as Embodiment 3 of the circuit breaker of the present invention, the electronic residual current fault monitor 41, the electromagnetic residual current fault monitor 42 and the electromagnetic relay 5 are arranged in the residual current analysis driving module 2, and the phase pole is respectively mounted in the second mounting groove and the first mounting groove to form a two-pole circuit breaker. Each phase pole of the circuit breaker includes a pair of phase wire terminals and a phase circuit structure electrically connected to the phase wire terminals. The pair of phase wire terminals are respectively used as an upstream phase wire terminal 31 and a downstream phase wire terminal 32 and are arranged oppositely on both sides of the first mounting groove, and the phase circuit structure is arranged in the first mounting groove between the upstream phase wire terminal 31 and the downstream phase wire terminal 32. The phase circuit structure includes a phase pole handle 33, a phase pole operating mechanism 34, a phase pole moving contact 35, an electromagnetic release 36, a thermal release 37 and an arc extinguishing chamber 38. The phase pole handle 33 and the phase pole operating mechanism 34 are arranged on the upper part of the first mounting groove. The phase pole handle 33 is connected to the phase pole operating mechanism 34 through a phase pole connecting rod. The phase pole moving contact 35 is connected to the lower part of the operating mechanism and is electrically connected to the thermal release 37 and the upstream phase wire terminal 31. The electromagnetic release 36 is fixed on one side of the phase pole operating mechanism 34 and is located below the phase pole handle 33. A phase pole static contact 39 matched with the phase pole moving contact 35 is fixed on one side of the electromagnetic release 36 close to the phase pole moving contact 35. The thermal release 37 is arranged below the phase pole operating mechanism 34. The arc extinguishing chamber 38 is arranged below the electromagnetic release 36. When the circuit breaker is used as a two-pole circuit breaker, the electronic residual current fault monitor 41 and the electromagnetic residual current fault monitor 42 are respectively provided with a phase pole primary winding, rather than a neutral pole primary winding; and the residual current fault monitor 4, the electromagnetic relay 5, the tripping mechanism 6 , etc. and the residual current monitoring circuit board are all mounted in the residual current analysis driving module 2.

In the present invention, the residual current fault monitor 4 includes an electromagnetic residual current fault monitor 42 and an electronic residual current fault monitor 41. Both the electromagnetic residual current fault monitor 42 and the electronic residual current fault monitor 41 are transformers. A power circuit of the circuit breaker passes through the transformers of the electromagnetic residual current fault monitor 42 and the electronic residual current fault monitor 41. The electromagnetic residual current fault monitor 42 is an electromagnetic transformer and the electronic residual current fault monitor 41 is an electronic transformer. In the case that the product has no power supply voltage, the electromagnetic residual current fault monitor 42 is used to monitor a sinusoidal AC residual current and a pulsating DC residual current; and in the case that the product has a power supply voltage (AC/DC85~265V), the electronic residual current fault monitor 41 is used to monitor residual currents such as a smooth DC residual current, a high-frequency sinusoidal AC residual current and a composite residual current. The composite residual current includes a pulsating DC residual current superimposed with a smooth DC residual current, and a sinusoidal AC residual current within 1kHz superimposed with a smooth DC residual current. At this time, the electromagnetic residual current fault monitor 42 does not work.

As shown in FIG. 6, a residual current analysis and comparison circuit is arranged in the residual current analysis driving module 2. The residual current analysis and comparison circuit is used to drive the actuator to operate the circuit breaker to trip and cut off. The residual current analysis and comparison circuit includes an electronic detection circuit that is dependent on a grid voltage and an electromagnetic detection circuit that is independent of the grid voltage. The electronic detection circuit is used for the detection of the electronic residual current fault monitor 41 to the circuits, and mainly monitors an AC fault residual current below 1 kHz, a pulsating DC residual current and a smooth DC residual current. The electronic detection circuit includes a working power supply and a detection circuit powered by the working power supply, wherein the detection circuit includes an electronic residual current detection circuit, a processing circuit and a comparison circuit. The electronic residual current detection circuit is used to collect a fault signal and converts the fault signal into a sampling output signal. The processing circuit is used to amplify the received sampling output signal to form a preprocessed signal. The comparison circuit is used to receive the preprocessing signal, compare the preprocessing signal with a set threshold, output a fault signal and control the drive circuit such that the actuator operates the circuit breaker to trip. The electromagnetic residual current detection circuit is used for the monitoring of the electromagnetic residual current fault monitor 42 to the circuits, and outputs a signal such that the actuator operates the circuit breaker to trip.

According to the circuit breaker of the present invention, the residual current analysis and comparison circuit arranged in the residual current analysis driving module includes two types of residual current analysis and detection circuits, i.e., an electronic detection circuit and an electromagnetic detection circuit, and the electronic detection circuit and the electromagnetic detection circuit can work together without interfering with each other, which is beneficial to the optimization and miniaturization of a circuit board.

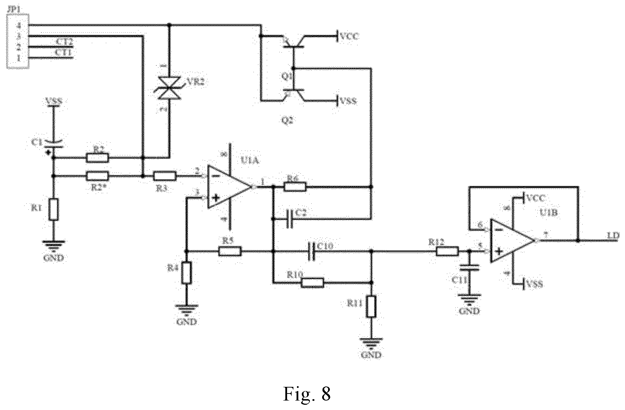

Specifically, as shown in FIG. 6, the residual current analysis driving module 2 includes a residual current analysis and comparison circuit. The residual current analysis and comparison circuit is used to drive the actuator to operate the circuit breaker to trip and cut off. The residual current analysis and comparison circuit includes an electronic detection circuit, an electromagnetic residual current detection circuit and a drive circuit, wherein the electronic detection circuit operates the actuator through the drive circuit to trip and cut off the circuit breaker, and the electromagnetic detection circuit directly trips and cuts off the circuit breaker through the actuator. The electronic detection circuit includes an electronic residual current detection circuit, a processing circuit and a comparison circuit, wherein an output terminal of the electronic residual current detection circuit is connected to an input terminal of the processing circuit, an output terminal of the processing circuit is connected to an input terminal of the comparison circuit, and an output terminal of the comparison circuit is connected to an input terminal of the drive circuit. The electronic residual current detection circuit is used to collect a fault signal and converts the fault signal into a sampling output signal. The processing circuit is used to amplify and/or filter the received sampling output signal to form a preprocessed signal. The comparison circuit is used to receive the preprocessing signal, compare the preprocessing signal with a set threshold, output a fault signal and control the drive circuit such that the actuator operates the circuit breaker to trip and cut off. Of course, the electronic residual current detection circuit may be connected with a diode and a voltage divider resistor to prevent an output signal from interfering with components in the electromagnetic residual current detection circuit. The output terminal of the electromagnetic residual current detection circuit is directly connected to the actuator such that the circuit breaker trips and cuts off. The working power supply includes a DC switching power supply which is used to reduce the grid voltage and forms a positive and negative bipolar power supply output through a self-feedback balancing circuit. In addition, it is preferable that a voltage stabilizing circuit is connected between the DC switching power supply and the residual current analysis and comparison circuit. The DC switching power supply forms a working power supply that supplies power to the residual current analysis circuit under the action of a rectifier diode, a fuse resistor and a filter circuit. One terminal of the rectifier diode is connected to an L pole of the power supply and the other terminal of the rectifier diode is connected to one terminal of the filter circuit; one terminal of the fuse resistor is connected to an N pole of the power circuit, and the other terminal of the fuse resistor is connected to the filter circuit; an output terminal of the filter circuit is connected to the DC switching power supply; a surge resistor is connected in parallel between the L pole of the power supply and the N pole of the power supply; and the DC switching power supply includes a DC/DC switching power supply chip, wherein an output terminal of the DC/DC switching power supply chip is connected to the voltage stabilizing circuit. A model of the DC/DC switching power supply chip UP 1 is LNK304/306. In the detection circuit of the electronic detection circuit, that is, from the electronic residual current detection circuit to the processing circuit, only four operational amplifiers are used to realize all functions, with low cost and low loss. In FIGS. 8 to 12, the four operational amplifiers are U1, U2, U3 and U4, wherein U1A and U1B belong to the same operational amplifier U1; and similarly, U2A and U2B belong to the operational amplifier U2, U3A and U3B belong to the operational amplifier U3, and U4A and U4B belong to the operational amplifier U4.

The electronic detection circuit and the electromagnetic residual current detection circuit can work together without interfering with each other and without any complex conversion circuit. In the presence of a grid voltage, the electromagnetic residual current detection circuit and the electronic detection circuit work together. If the residual current is an AC residual current or a pulsating DC residual current at a grid frequency, the electronic detection circuit can output a fault signal to the drive circuit such that the actuator operates the circuit breaker to actuate, or the electromagnetic residual current detection circuit can directly drive the actuator to operate the circuit breaker to actuate, and the two signals will not interfere with each other. If the residual current is a smooth DC or high-frequency residual current, only the electronic detection circuit outputs a fault signal to the drive circuit. If the electronic detection circuit is connected with a diode and a voltage divider resistor, the fault signal, after passing through the backward diode and the voltage divider resistor, is not enough to affect the polarity capacitance in the electromagnetic residual current detection circuit, and meanwhile, an input signal of the detection circuit is weak, which neither affects the normal operation of the electronic detection circuit nor is it enough to drive the actuator. In the absence of a grid voltage, the electronic detection circuit does not work and does not interfere with the electromagnetic residual current detection circuit. At this time, the electromagnetic residual current detection circuit detects an AC residual current and a pulsing DC residual current at a grid frequency. It should be pointed out that the working principle of detecting a B-type residual current is the same, and only several types of B-type residual currents are listed in the present invention.

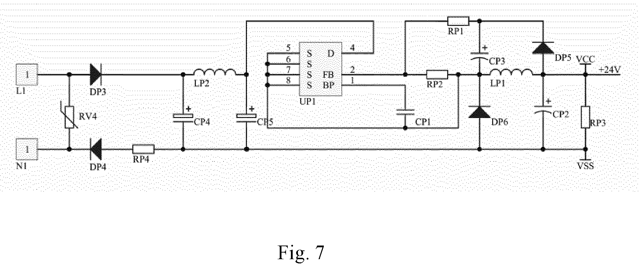

The working power supply that supplies power to the residual current analysis and comparison circuit is shown in FIG. 7. The working power supply maintains the stability of an output voltage by dropping switching cycles. The working power supply includes a DC switching power supply chip UP1 having a model of LNK304/306. A diode DP3 and a diode DP4 are used as rectifier diodes, and RP4 is used as a fuse resistor. An anode of the diode DP3 is connected to the L pole of the power supply and one terminal of the piezoresistor RV4; and a cathode of the diode DP3 is connected to the filter circuit. A cathode of the diode DP4 is connected to the N pole of the power supply and the other terminal of the piezoresistor RV4, an anode of the diode DP4 is connected to one terminal of the fuse resistor RP4, and the other terminal of the fuse resistor RP4 is connected to the filter circuit. The filter circuit includes a capacitor CP4, a capacitor CP5 and an inductor LP2. The cathode of the diode DP3 is connected to an anode of the capacitor CP4 and one terminal of the inductor LP2, and the other terminal of the inductor LP2 is connected to a drain pin D of the DC switching power supply chip UP1; and the capacitor CP4, a cathode of the capacitor CP5, and the other terminal of the resistor RP4 are all connected to the cathode VSS of the power supply. The voltage stabilizing circuit includes a diode DP5, a diode DP6, a capacitor CP1, a capacitor CP2, a capacitor CP3, a resistor RP1, a resistor RP2, a resistor RP3 and an inductor LP1, wherein one terminal of the capacitor CP1 is connected to a bypass pin BP of the DC switching power supply chip UP1, and the other terminal of the capacitor CP1 is connected to a plurality of source pins S of the DC switching power supply chip UP1; a feedback pin FB of the DC switching power supply chip UP1 is connected to one terminal of the resistor RP1 and one terminal of the resistor RP2 respectively; the other terminal of the resistor RP1 is respectively connected to an anode of the capacitor CP3 and a cathode of the diode DP5; the other terminal of the resistor RP2 is connected to the other terminal of the capacitor CP1 and one terminal of the inductor LP1; a cathode of the capacitor CP3 and a cathode of the diode DP6 are also connected to one terminal of the inductor LP1 at the same time; the other terminal of the inductor LP1 is connected to the anode VCC of the power supply; the anode of the diode DP5, the anode of the capacitor CP2, and one terminal of the resistor RP3 are connected to the anode VCC of the power supply at the same time; and an anode of the diode DP6, a cathode of the capacitor CP2, and the other terminal of the resistor RP3 are all connected to the cathode VSS of the power supply. The voltage feedback pin FB of the DC switching power supply chip UP1 is connected to the resistor RP1 and the resistor RP2 respectively. The resistor RP1 and the resistor RP2 form a resistor divider which is used to detect and stabilize a voltage of the capacitor CP3, so that the voltage of the voltage feedback pin FB of the DC switching power supply chip UP1 is a standard value, thereby supplying a working voltage of 24V to the residual current analysis and comparison circuit.

As shown in FIG. 8, the electronic residual current detection circuit of the electronic detection circuit includes a transformer connector JP1, an electronic residual current fault monitor 41, a TVS anti-surge shock protection absorption tube VR2, a triode Q1, a triode Q2, a capacitor C1, a capacitor C2, a capacitor C10, a capacitor C11, a resistor R2, a resistor R2*, a resistor R3, a resistor R4, a resistor R5, a resistor R6, a resistor R10, a resistor R11, a resistor R12, an operational amplifier U1A and an operational amplifier U1B; the transformer connector JP1 is connected to a detection line, and used to connect the electronic residual current fault monitor 41 with the electromagnetic residual current fault monitor 42; four connecting terminals are provided on the transformer connector JP1; the first connecting terminal and the second connecting terminal of the transformer connector JP1 are connected to the electromagnetic residual current fault monitor 42; the electromagnetic residual current fault monitor 42 is an electromagnetic transformer; one secondary winding output terminal CT1 of the electromagnetic residual current fault detector 42 and the other secondary winding output terminal CT2 of the electromagnetic residual current fault detector 42 are connected to the first connecting terminal and the second connecting terminal of the transformer connector JP1; the third connecting terminal and the fourth connecting terminal of the transformer connector JP1 are used to connect the electronic residual current fault monitor 41; the electronic residual current fault monitor 41 is an electronic transformer; the fourth connecting terminal of the transformer connector JP1, i.e., one terminal of a winding of the electronic residual current fault monitor 41 is connected to one end of the TVS anti-surge shock protection absorption tube VR2, an emitter of the transistor Q1, and an emitter of the triode Q2; the other end of the TVS anti-surge impact protection absorption tube VR2 and the third connecting terminal of the transformer connector JP1, i.e., the other terminal of the winding of the electronic residual current fault monitor 41 are connected to one terminal of the resistor R2, the other terminal of the resistor R2 is connected to the anode of the capacitor C1, and the cathode of the capacitor C1 is connected to the cathode VSS of the power supply; the third connecting terminal of the transformer connector JP1 is connected to one terminal of the resistor R2* and one terminal of the resistor R3; the other end of the TVS anti-surge shock protection absorption tube VR2 is connected to one terminal of the resistor R2* and one terminal of the resistor R3; the other terminal of the resistor R2* and one terminal of the resistor R1 are connected to the anode of the capacitor C1; the other terminal of the resistor R1 is connected to GND; one terminal of the resistor R3 is connected to the resistor R2*; the other terminal of the resistor R3 is connected to an inverting input terminal of the operational amplifier U1A, and a positive input terminal of the operational amplifier U1A is connected to one terminal of the resistor R4; the other terminal of the resistor R4 is connected to GND; an output terminal of the operational amplifier U1A is connected to one terminal of the resistor R6, and the other terminal of the resistor R6 is connected to a base of the triode Q1 and a base of the triode Q2; a collector of the triode Q1 is connected to the anode VCC of the power supply, and a collector of the triode Q2 is connected to the cathode VSS of the power supply; an inverting input terminal of the operational amplifier U1B is connected to an output terminal LD of the operational amplifier U1B; a positive input terminal of the operational amplifier U1B is connected to one terminal of the resistor R12 and one terminal of the capacitor C11; the other terminal of the capacitor C11 is connected to GND; the other terminal of the resistor R12 is connected to one terminal of the resistor R11 and one terminal of the capacitor C10; the other terminal of the capacitor C10 is connected to one terminal of the resistor R10 and one terminal of the resistor R5; the other terminal of the resistor R5 is connected to GND through the resistor R4; the other terminal of the resistor R10 is connected to GND through the resistor R11; and two terminals of the capacitor C2 are connected in parallel to two terminals of the resistor R6. The sampling circuit can collect a pulsating DC residual current, a smooth DC residual current, and a residual current under a 1000Hz high-frequency mixed waveform. In this embodiment, the electronic residual current fault monitor 41 and the electromagnetic residual current fault monitor 42 are connected to the detection line through the transformer connector JP1, which is convenient for the connection of the lines. Of course, the transformer connector JP1 may not be used.

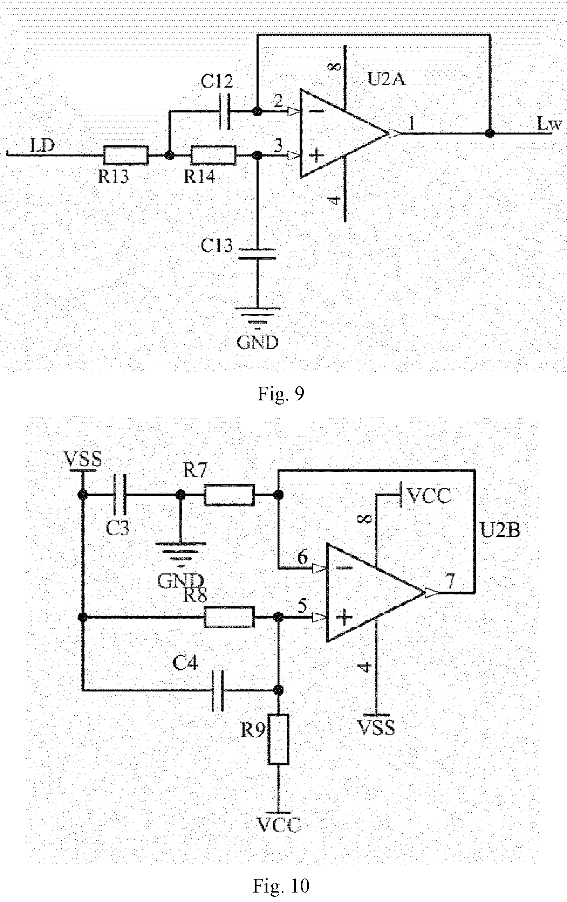

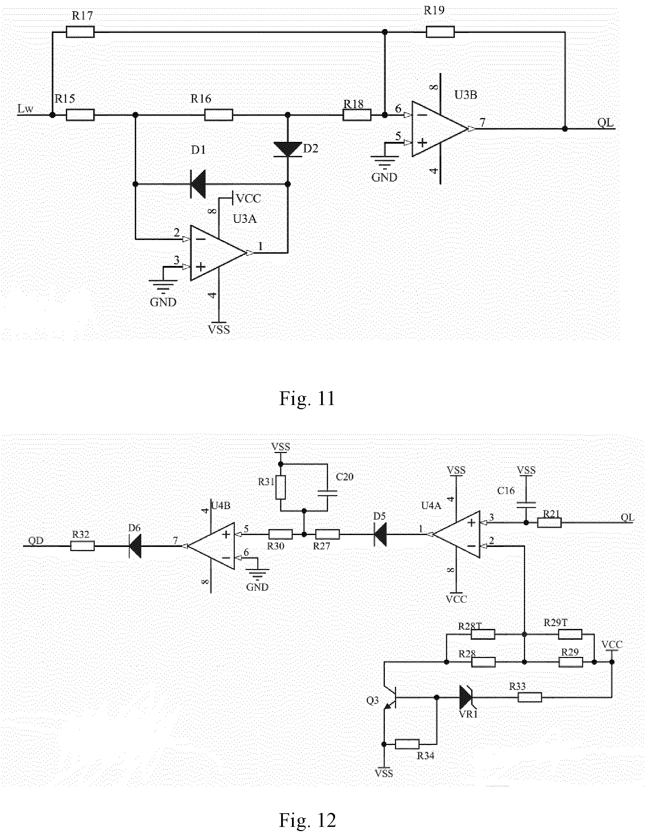

As shown in FIG. 9 and FIG. 10, the processing circuit is used for filtering the residual current signal monitored by the electronic residual current fault monitor 41. The processing circuit of FIG. 9 includes an operational amplifier U2A, a capacitor C12, a capacitor C13, a resistor R13 and a resistor R14, wherein a positive input terminal of the operational amplifier U2A is connected to one terminal of the resistor R14 and one terminal of the capacitor C13; an output terminal Lw of the operational amplifier U2A and one terminal of the capacitor C12 are both connected to an inverting input terminal of the operational amplifier U2A; the other terminal of the resistor 14 and the other terminal of the capacitor C12 are connected to one terminal of the resistor R13; the other terminal of the resistor R13 is connected to an output terminal of the electronic residual current detection circuit, that is, to an output terminal LD of the operational amplifier U1B; and the other terminal of the capacitor C13 is grounded. FIG. 10 illustrates a voltage reference circuit that supplies a voltage reference to the circuits in FIG. 8 and FIG. 12. The voltage reference circuit has VCC(+12V), GND(-12V), VSS(0V) which are currents that can supply a stable output voltage during the changes in the process, power supply voltage and temperature. The voltage reference circuit includes an operational amplifier U2B, a resistor R7, a resistor R8, a capacitor C3 and a capacitor C4, wherein a positive input terminal of the operational amplifier U2B is connected to one terminal of the resistor R8, one terminal of the resistor R9 and one terminal the capacitor C4; an output terminal of the operational amplifier U2B and one terminal of the resistor R7 are connected to an inverting output terminal of the operational amplifier U2B; one terminal of the capacitor C3 is connected to the other terminal of the resistor R7 and connected to GND, and the other terminal of the capacitor C3 is connected to the cathode VSS of the power supply; the other terminal of the resistor R8 and the other terminal of the capacitor C4 are connected to the cathode VSS of the power supply; and the other end of the resistor R9 is connected to the anode VCC of the power supply.

As shown in FIG. 11, the comparison circuit includes an operational amplifier U3A, an operational amplifier U3B, a diode D1, a diode D2, a resistor R15, a resistor R16, a resistor R17, a resistor R18 and a resistor R19; a positive input terminal of the operational amplifier U3A is grounded, and an inverting input terminal of the operational amplifier U3A is connected to one terminal of the resistor R15, one terminal of the resistor R16 and a cathode of the diode D1; an output terminal of the operational amplifier U3A is connected to an anode of the diode D1 and a cathode of the diode D2; a positive output terminal of the operational amplifier U3B is connected to GND, and an inverting input terminal of the operational amplifier U3B is connected to one terminal of the resistor R17, one terminal of the resistor R18 and one terminal of the resistor R19; an output terminal QL of the operational amplifier U3B is connected to the other terminal of the resistor R19; an anode of diode D2 and the other terminal of the resistor R16 are connected to the other terminal of the resistor R18; and the other terminal of the resistor R15 and the other terminal of the resistor R17 are connected to an output terminal of the processing circuit, i.e., connected to the output terminal Lw of the operational amplifier U2A.

As shown in FIG. 12, the drive circuit includes an operational amplifier U4A, an operational amplifier U4B, a resistor R21, a resistor R27, a resistor R28, a resistor R28T, a resistor R29, a resistor R29T, a resistor R30, a resistor R31, a resistor R32, a resistor R33, a resistor R34, an adjustable resistor VR1, a capacitor C20 and a triode Q3; a positive input terminal of the operational amplifier U4A is connected to one terminal of the capacitor C16 and one terminal of the resistor R21; an output terminal of the operational amplifier U4A is connected to an anode of the diode D5; the other terminal of the resistor R21 is connected to an output terminal of the comparison circuit, i.e., connected to an output terminal QL of the operational amplifier U3B of the comparison circuit; one terminal of the resistor R29T and one terminal of the resistor R29 are connected to the anode VCC of the power supply; the other terminal of the resistor R29T is connected to an inverting input terminal of the operational amplifier U4A and one terminal of the resistor R28T; the other terminal of the resistor R29 is connected to an inverting input terminal of the operational amplifier U4A and one terminal of the resistor R28; the other terminal of the resistor R28T and the other terminal of the resistor R28 are connected to a collector of the triode Q3; an emitter of the triode Q3 is connected to the cathode VSS of the power supply; one terminal of the resistor R33 is connected to the anode VCC of the power supply, and the other terminal of the resistor R33 is connected to a cathode of the adjustable resistor VR1; an anode of the adjustable resistor VR1 is connected to one terminal of the resistor R34 and a base of the triode Q3; the other terminal of the resistor R34 is connected to the cathode VSS of the power supply; an inverting input terminal of the operational amplifier U4B is connected to GND; an output terminal of the operational amplifier U4B is connected to an anode of the diode D6; a cathode of the diode D6 is connected to the controller P1 serving as the actuator through the resistor R32, i.e., connected to a wiring terminal QD of the controller P1; a positive input terminal of the operational amplifier U4B is connected to one terminal of the resistor R30; the other terminal of the resistor R30 is connected to one terminal of the resistor R27, one terminal of the resistor R31 and one terminal of the capacitor C20; the other terminal of the resistor R27 is connected to a cathode of the diode D5; and the other terminal of the resistor R31 and the other terminal of the capacitor C20 are connected to the cathode VSS of the power supply.

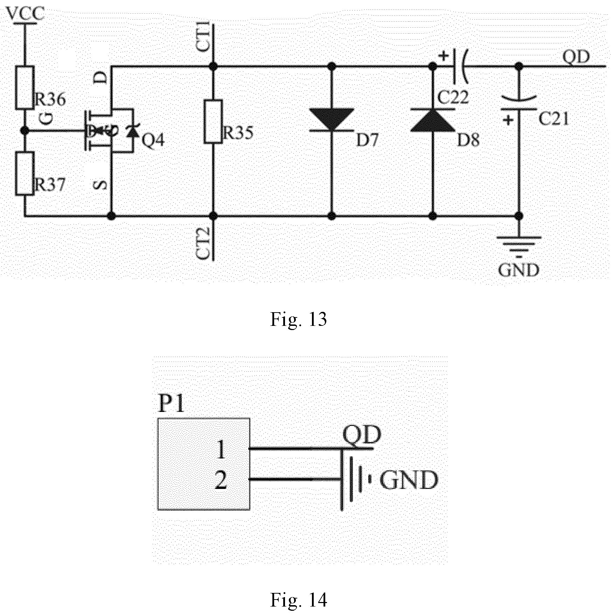

The electromagnetic residual current detection circuit is used to process the residual current signal monitored by the electromagnetic residual current fault monitor 42. After the signal is processed, the electromagnetic residual current detection circuit directly drives the actuator to trip and cut off the circuit breaker. As shown in FIG. 13, the electromagnetic residual current detection circuit includes a capacitor C21, a capacitor C22, a resistor R34, a resistor R36, a resistor R37, a diode D7, a diode D8, an N-MOS field effect transistor Q4 and a controller P1; one terminal of the resistor R36 is connected to the anode VCC of the power supply, and the other terminal of the resistor R36 is connected to one terminal of the resistor R37 and a gate G of the N-MOS field effect transistor Q4; a drain D of the N-MOS field effect transistor Q4 is connected to one terminal of the resistor R35, and a source S of the N-MOS field effect transistor Q4 is connected to the other terminal of the resistor R37 and the other terminal of the resistor R35; one terminal of the resistor R35, which is connected to the drain D of the N-MOS field effect transistor Q4, is connected to a secondary winding output terminal CT1 of an electromagnetic transformer of the electromagnetic residual current fault monitor 42; one terminal of the resistor R35, which is connected to the source S of the N-MOS field effect transistor Q4, is connected to the other secondary winding output terminal CT2 of the electromagnetic transformer of the electromagnetic residual current fault monitor 42; an anode of the diode D7 and a cathode of the diode D8 are both connected to an anode of the capacitor C22; a cathode of the diode D7 and an anode of the diode D8 are both connected to an anode of the capacitor C21; the anode of the capacitor C22 is connected to the drain D of the N-MOS field effect transistor Q4; the anode of the capacitor C21 is connected to the source S of the N-MOS field effect transistor Q4 and grounded to GND; and a cathode of the capacitor C21 and a cathode of the capacitor C22 are connected to the actuator, i.e., connected to a wiring terminal QD of the controller P1 serving as the actuator.

As shown in FIG. 14, the actuator includes the controller P1 which is an EMR controller, wherein EMR is the electromagnetic relay 5 in FIG. 5. The EMR controller includes a wiring terminal QD and a wiring terminal connected to GND. The electronic detection circuit makes the actuator to operate the circuit breaker to trip and cut off through the drive circuit, and the electromagnetic residual current detection circuit directly outputs a fault signal to drive the actuator EMR to trigger a tripping action of the circuit breaker.

According to the circuit breaker of the present invention, the residual current analysis and comparison circuit provided in the residual current analysis driving module 2 can be used to trip and cut off the circuit breaker when a plurality of residual currents such as a sinusoidal AC residual current, a pulsating DC residual current, a smooth DC residual current, a composite residual current, a pulsating DC residual current superimposed with a smooth DC residual current, an AC residual current superimposed with a smooth DC residual current, and a high-frequency sinusoidal AC residual current, appearing in a load line, reach an action threshold.

## Claims

1. A circuit breaker, comprising an actuator and a residual current analysis and comparison circuit for driving the actuator, the residual current analysis and comparison circuit comprises an electronic detection circuit, an electromagnetic residual current detection circuit and a drive circuit;
wherein the electronic detection circuit is connected to an electronic residual current fault monitor (41) for monitoring a smooth DC residual current, a high-frequency sinusoidal AC residual current and a composite residual current and comprises a working power supply and a detection circuit powered by the working power supply; the detection circuit comprises an electronic residual current detection circuit, a processing circuit and a comparison circuit; the electronic residual current detection circuit is used to collect a fault signal and converts the fault signal into a sampling output signal; the processing circuit is used to amplify the received sampling output signal to form a preprocessed signal; the comparison circuit is used to receive the preprocessing signal, compare the preprocessing signal with a set threshold, output a fault signal and control the drive circuit such that the actuator operates the circuit breaker to trip; and the electromagnetic residual current detection circuit is connected to an electromagnetic residual current fault monitor (42) for monitoring a sinusoidal AC residual current and a pulsating DC residual current, and makes the actuator operate the circuit breaker to trip through the output signal; the circuit breaker comprising an insulating housing (1), wherein a partition plate is arranged in the insulating housing (1) and divides a space inside the circuit breaker into two parts, a first mounting groove and a second mounting groove; the first mounting groove and the second mounting groove are used to install a phase pole or a neutral pole of the circuit breaker therein; a residual current analysis driving module (2) which is arranged in parallel on one side of the insulating housing (1); a residual current detection circuit board is arranged in the residual current analysis driving module (2), and the residual current analysis and comparison circuit is arranged on the residual current detection circuit board; and the electronic residual current fault monitor (41) and the electromagnetic residual current fault monitor (42) are arranged in the residual current analysis driving module (2) or in the second mounting groove.

2. The circuit breaker according to claim 1, wherein in the case that the electronic residual current fault monitor (41) has no power supply voltage, the electromagnetic residual current fault monitor (42) is used to monitor the smooth DC residual current, a high-frequency sinusoidal AC residual current and a composite residual current; and in the case that the electronic residual current fault monitor (41) has a power supply voltage, the electronic residual current fault monitor (41) is used to monitor the sinusoidal AC residual current and a pulsating DC residual current, and the electromagnetic residual current fault monitor (42) does not work at this time.

3. The circuit breaker according to claim 1, wherein the working power supply comprises a DC switching power supply; a voltage stabilizing circuit is connected between the DC switching power supply and the residual current analysis and comparison circuit; the DC switching power supply also comprises a rectifier diode, a fuse resistor and a filter circuit, wherein one terminal of the rectifier diode is connected to an L pole of the power supply and the other terminal of the rectifier diode is connected to one terminal of the filter circuit; one terminal of the fuse resistor is connected to an N pole of the power circuit, and the other terminal of the fuse resistor is connected to the filter circuit; an output terminal of the filter circuit is connected to the DC switching power supply; a surge resistor is connected in parallel between the L pole of the power supply and the N pole of the power supply; and the DC switching power supply comprises a DC/DC switching power supply chip, wherein an output terminal of the DC/DC switching power supply chip is connected to the voltage stabilizing circuit.

4. The circuit breaker according to claim 1, wherein the electromagnetic residual current detection circuit comprises a capacitor C21, a capacitor C22, a resistor R34, a resistor R36, a resistor R37, a diode D7, a diode D8, an N-MOS field effect transistor Q4 and a controller P1; one terminal of the resistor R36 is connected to the anode VCC of the power supply, and the other terminal of the resistor R36 is connected to one terminal of the resistor R37 and a gate G of the N-MOS field effect transistor Q4; a drain D of the N-MOS field effect transistor Q4 is connected to one terminal of the resistor R35, and a source S of the N-MOS field effect transistor Q4 is connected to the other terminal of the resistor R37 and the other terminal of the resistor R35; one terminal of the resistor R35, which is connected to the drain D of the N-MOS field effect transistor Q4, is connected to a secondary winding output terminal CT1 of an electromagnetic transformer of the electromagnetic residual current fault monitor (42); one terminal of the resistor R35, which is connected to the source S of the N-MOS field effect transistor Q4, is connected to the other secondary winding output terminal CT2 of the electromagnetic transformer of the electromagnetic residual current fault monitor (42); an anode of the diode D7 and a cathode of the diode D8 are both connected to an anode of the capacitor C22; a cathode of the diode D7 and an anode of the diode D8 are both connected to an anode of the capacitor C21; the anode of the capacitor C22 is connected to the drain D of the N-MOS field effect transistor Q4; the anode of the capacitor C21 is connected to the source S of the N-MOS field effect transistor Q4 and connected to GND; and a cathode of the capacitor C21 and a cathode of the capacitor C22 are connected to the actuator.

5. The circuit breaker according to claim 1, wherein the electronic residual current detection circuit comprises a TVS anti-surge shock protection absorption tube VR2, a triode Q1, a triode Q2, a capacitor C1, a capacitor C2, a capacitor C10, a capacitor C11, a resistor R2, a resistor R2*, a resistor R3, a resistor R4, a resistor R5, a resistor R6, a resistor R10, a resistor R11, a resistor R12, an operational amplifier U1A and an operational amplifier U1B; one terminal of a winding of the electronic residual current fault monitor (41) is connected to one end of the TVS anti-surge shock protection absorption tube VR2, an emitter of the transistor Q1, and an emitter of the triode Q2; the other end of the TVS anti-surge impact protection absorption tube VR2 and the other terminal of the winding of the electronic residual current fault monitor (41) are connected to one terminal of the resistor R2, the other terminal of the resistor R2 is connected to an anode of the capacitor C1, and a cathode of the capacitor C1 is connected to the cathode VSS of the power supply; the other winding of the electronic transformer of the electronic residual current fault monitor 41 is connected to one terminal of the resistor R2* and one terminal of the resistor R3; the other end of the TVS anti-surge shock protection absorption tube VR2 is connected to one terminal of the resistor R2* and one terminal of the resistor R3; the other terminal of the resistor R2* and one terminal of the resistor R1 are connected to the anode of the capacitor C1; the other terminal of the resistor R1 is connected to GND; one terminal of the resistor R3 is connected to the resistor R2*; the other terminal of the resistor R3 is connected to an inverting input terminal of the operational amplifier U1A, and a positive input terminal of the operational amplifier U1A is connected to one terminal of the resistor R4; the other terminal of the resistor R4 is connected to GND; an output terminal of the operational amplifier U1A is connected to one terminal of the resistor R6, and the other terminal of the resistor R6 is connected to a base of the triode Q1 and a base of the triode Q2; a collector of the triode Q1 is connected to the anode VCC of the power supply, and a collector of the triode Q2 is connected to the cathode VSS of the power supply; an inverting input terminal of the operational amplifier U1B is connected to an output terminal LD of the operational amplifier U1B; a positive input terminal of the operational amplifier U1B is connected to one terminal of the resistor R12 and one terminal of the capacitor C11; the other terminal of the capacitor C11 is connected to GND; the other terminal of the resistor R12 is connected to one terminal of the resistor R11 and one terminal of the capacitor C10; the other terminal of the capacitor C10 is connected to one terminal of the resistor R10 and one terminal of the resistor R5; the other terminal of the resistor R5 is connected to GND through the resistor R4; the other terminal of the resistor R10 is connected to GND through the resistor R11; and two terminals of the capacitor C2 are connected in parallel to two terminals of the resistor R6.

6. The circuit breaker according to claim 1, wherein the processing circuit comprises an operational amplifier U2A, a capacitor C12, a capacitor C13, a resistor R13 and a resistor R14, wherein a positive input terminal of the operational amplifier U2A is connected to one terminal of the resistor R14 and one terminal of the capacitor C13; an output terminal Lw of the operational amplifier U2A and one terminal of the capacitor C12 are both connected to an inverting input terminal of the operational amplifier U2A; the other terminal of the resistor 14 and the other terminal of the capacitor C12 are both connected to one terminal of the resistor R13; the other terminal of the resistor R13 is connected to an output terminal of the electronic residual current detection circuit; and the other terminal of the capacitor C13 is grounded.

7. The circuit breaker according to claim 1, wherein the comparison circuit comprises an operational amplifier U3A, an operational amplifier U3B, a diode D1, a diode D2, a resistor R15, a resistor R16, a resistor R17, a resistor R18 and a resistor R19; a positive input terminal of the operational amplifier U3A is grounded, and an inverting input terminal of the operational amplifier U3Ais connected to one terminal of the resistor R15, one terminal of the resistor R16 and a cathode of the diode D1; an output terminal of the operational amplifier U3A is connected to an anode of the diode D1 and a cathode of the diode D2; a positive output terminal of the operational amplifier U3B is connected to GND, and an inverting input terminal of the operational amplifier U3B is connected to one terminal of the resistor R17, one terminal of the resistor R18 and one terminal of the resistor R19; an output terminal QL of the operational amplifier U3B is connected to the other terminal of the resistor R19; an anode of diode D2 and the other terminal of the resistor R16 are connected to the other terminal of the resistor R18; and the other terminal of the resistor R15 and the other terminal of the resistor R17 are connected to an output terminal of the processing circuit.

8. The circuit breaker according to claim 1, wherein the drive circuit comprises an operational amplifier U4A, an operational amplifier U4B, a resistor R21, a resistor R27, a resistor R28, a resistor R28T, a resistor R29, a resistor R29T, a resistor R30, a resistor R31, a resistor R32, a resistor R33, a resistor R34, an adjustable resistor VR1, a capacitor C20 and a triode Q3; a positive input terminal of the operational amplifier U4A is connected to one terminal of the capacitor C16 and one terminal of the resistor R21; an output terminal of the operational amplifier U4A is connected to an anode of the diode D5; the other terminal of the resistor R21 is connected to an output terminal of the comparison circuit; one terminal of the resistor R29T and one terminal of the resistor R29 are connected to the anode VCC of the power supply; the other terminal of the resistor R29T is connected to an inverting input terminal of the operational amplifier U4A and one terminal of the resistor R28T; the other terminal of the resistor R29 is connected to an inverting input terminal of the operational amplifier U4A and one terminal of the resistor R28; the other terminal of the resistor R28T and the other terminal of the resistor R28 are connected to a collector of the triode Q3; an emitter of the triode Q3 is connected to the cathode VSS of the power supply; one terminal of the resistor R33 is connected to the anode VCC of the power supply, and the other terminal of the resistor R33 is connected to a cathode of the adjustable resistor VR1; an anode of the adjustable resistor VR1 is connected to one terminal of the resistor R34 and a base of the triode Q3; the other terminal of the resistor R34 is connected to the cathode VSS of the power supply; an inverting input terminal of the operational amplifier U4B is connected to GND; an output terminal of the operational amplifier U4B is connected to an anode of the diode D6; a cathode of the diode D6 is connected to the actuator through the resistor R32; a positive input terminal of the operational amplifier U4B is connected to one terminal of the resistor R30; the other terminal of the resistor R30 is connected to one terminal of the resistor R27, one terminal of the resistor R31 and one terminal of the capacitor C20; the other terminal of the resistor R27 is connected to a cathode of the diode D5; and the other terminal of the resistor R31 and the other terminal of the capacitor C20 are connected to the cathode VSS of the power supply.

9. The circuit breaker according to claim 6, wherein the processing circuit further comprises a voltage reference circuit which is used when a power grid supplies a voltage; the voltage reference circuit comprises an operational amplifier U2B, a resistor R7, a resistor R8, a capacitor C3 and a capacitor C4; a positive input terminal of the operational amplifier U2B is connected to one terminal of the resistor R8, one terminal of the resistor R9 and one terminal of the capacitor C4; an output terminal of the operational amplifier U2B and one terminal of the resistor R7 are connected to an inverting output terminal of the operational amplifier U2B; one terminal of the capacitor C3 is connected to the other terminal of the resistor R7 and connected to GND; the other terminal of the capacitor C3 is connected to the cathode VSS of the power supply; the other terminal of the resistor R8 and the other terminal of the capacitor C4 are connected to the cathode VSS of the power supply; and the other terminal of the resistor R9 is connected to the anode VCC of the power supply.

10. The circuit breaker according to claim 1, wherein a width of the residual current driving module is one-third of a total width of the circuit breaker; and the width of the first mounting groove and the second mounting groove is equal.

11. The circuit breaker according to claim 1, wherein a phase pole of the circuit breaker is mounted in the first mounting groove; a neutral phase of the circuit breaker, the electronic residual current fault monitor (41), the electromagnetic residual current fault monitor (42), an electromagnetic relay (5) and a tripping mechanism (6) that can be triggered by the electromagnetic relay (5) are mounted in the second mounting groove.

12. The circuit breaker according to claim 1, wherein the phase poles of the circuit breaker are both mounted in the first mounting groove and the second mounting groove; and the electronic residual current fault monitor (41), the electromagnetic residual current fault monitor (42), and the electromagnetic relay (5) are arranged in the residual current analysis driving module (2).

13. The circuit breaker according to claim 11 or 12, wherein the phase pole of the circuit breaker comprises a pair of phase wire terminals and a phase circuit structure electrically connected to the phase wire terminals; the pair of phase wire terminals are respectively used as an upstream phase wire terminal (31) and a downstream phase wire terminal (32) and are arranged oppositely on both sides of the first mounting groove, and the phase circuit structure is arranged in the first mounting groove between the upstream phase wire terminal (31) and the downstream phase wire terminal (32); the phase circuit structure comprises a phase pole handle (33), a phase pole operating mechanism (34), a phase pole moving contact (35), an electromagnetic release (36), a thermal release (37) and an arc extinguishing chamber (38); the phase pole handle (33) and the phase pole operating mechanism (34) are arranged on the upper part of the first mounting groove; the phase pole handle (33) is connected to the phase pole operating mechanism (34) through a phase pole connecting rod; the phase pole moving contact (35) is connected to the lower part of the operating mechanism and is electrically connected to the thermal release (37) and the upstream phase wire terminal (31); the electromagnetic release (36) is fixed on one side of the phase pole operating mechanism (34) and is located below the phase pole handle (33); a phase pole static contact (39) matched with the phase pole moving contact (35) is fixed on one side of the electromagnetic release (36) close to the phase pole moving contact (35); the thermal release (37) is arranged below the phase pole operating mechanism (34); and the arc extinguishing chamber (38) is arranged below the electromagnetic release (36).

14. The circuit breaker according to claim 11, wherein the neutral pole of the circuit breaker comprises a pair of neutral wire terminals and a neutral wire circuit structure electrically connected to the neutral wire terminals; the pair of neutral wire terminals are respectively used as an upstream neutral wire terminal (71) and a downstream neutral wire terminal (72) and are arranged oppositely on both sides of the second mounting groove, and the neutral wire circuit structure is arranged in the second mounting groove between the upstream neutral wire terminal (71) and the downstream neutral wire terminal (72); the neutral wire circuit structure comprises a neutral wire handle (73), a neutral wire moving contact assembly, an electromagnetic relay (5), an electronic residual current fault monitor (41) and an electromagnetic residual current fault monitor (42); the neutral wire handle (73) and the tripping mechanism (6) are arranged on the upper part of the second mounting groove; the neutral wire handle (73) is coupled with the phase pole handle (33) and is connected to the tripping mechanism (6) through a neutral wire connecting rod; the tripping mechanism (6) is connected to the phase pole operating mechanism (34); the electromagnetic relay (5) is arranged on one side of the tripping mechanism (6) and below the neutral wire handle (73); the electronic residual current fault monitor (41) and the electromagnetic residual current fault monitor (42) are arranged side by side below the electromagnetic relay (5); and a neutral wire static contact (76) that cooperates with the neutral wire moving contact (74) mechanism is arranged on one side of the electronic residual current fault monitor (41) and the electromagnetic residual current fault monitor (42).

## Patentansprüche

1. Schutzschalter, umfassend einen Aktuator und eine Reststrom-Analysen- und Vergleichsschaltung zum Treiben des Aktuators, wobei die Reststrom-Analysen- und Vergleichsschaltung eine elektronische Detektionsschaltung, eine elektromagnetische Reststrom-Detektionsschaltung und eine Treiberschaltung umfasst;
worin die elektronische Detektionsschaltung mit einem elektronischen Reststromfehlerüberwachungsgerät (41) zur Überwachung eines glatten GS-Reststroms, eines Hochfrequenz-Sinus-WS-Reststroms und eines Verbund-Reststroms verbunden ist und eine Arbeitsstromversorgung und eine Detektionsschaltung, die von der Arbeitsstromversorgung angetrieben wird, umfasst; die Detektionsschaltung eine elektronische Reststrom-Detektionsschaltung, eine Verarbeitungsschaltung und eine Vergleichsschaltung umfasst; die elektronische Reststrom-Detektionsschaltung benutzt wird, um ein Fehlersignal zu sammeln, und das Fehlersignal in ein Abtast-Ausgabesignal umwandelt; die Verarbeitungsschaltung benutzt wird, um das empfangene Abtast-Ausgabesignal zu verstärken, um ein vorverarbeitetes Signal zu bilden; die Vergleichsschaltung benutzt wird, um das Vorverarbeitungssignal zu empfangen, das Vorverarbeitungssignal mit einer festgesetzten Schwelle zu vergleichen, ein Fehlersignal auszugeben und die Treiberschaltung derart zu steuern, dass der Aktuator den Schutzschalter zum Auslösen betätigt; und die elektromagnetische Reststrom-Detektionsschaltung mit einem elektromagnetischen Reststromfehlerüberwachungsgerät (42) zur Überwachung eines Sinus-WS-Reststroms und eines Impuls-GS-Reststroms verbunden ist, und bewirkt, dass der Aktuator den Schutzschalter zum Auslösen durch das Ausgabesignal betätigt;
wobei der Schutzschalter ein Isoliergehäuse (1) umfasst, worin eine Trennplatte im Isoliergehäuse (1) angeordnet ist und einen Raum innerhalb des Schutzschalters in zwei Teile, eine erste Montagenut und eine zweite Montagenut trennt; die erste Montagenut und die zweite Montagenut benutzt werden, um einen Phasenpol oder einen Neutralpol des Schutzschalters darin zu installieren; ein Reststrom-Analysen-Treibermodul (2), das parallel an einer Seite des Isoliergehäuses (1) angeordnet ist; eine Reststrom-Detektionsschaltungsplatine im Reststrom-Analysen-Treibermodul (2) angeordnet ist, und die Reststrom-Analysen- und Vergleichsschaltung an der Reststrom-Detektionsschaltungsplatine angeordnet ist; und das elektronische Reststromfehlerüberwachungsgerät (41) und das elektromagnetische Reststromfehlerüberwachungsgerät (42) im Reststrom-Analysen-Treibermodul (2) oder in der zweiten Montagenut angeordnet sind.

2. Schutzschalter nach Anspruch 1, worin in dem Falle, dass das elektronische Reststromfehlerüberwachungsgerät (41) keine Stromversorgungsspannung hat, das elektromagnetische Reststromfehlerüberwachungsgerät (42) benutzt wird, um den glatten GS-Reststrom, einen Hochfrequenz-Sinus-WS-Reststrom und einen Verbund-Reststrom zu überwachen; und in dem Falle, dass das elektronische Reststromfehlerüberwachungsgerät (41) eine Stromversorgungsspannung hat, das elektronische Reststromfehlerüberwachungsgerät (41) benutzt wird, um den Sinus-WS-Reststrom und den Impuls-GS-Reststrom zu überwachen, und das elektromagnetische Reststromfehlerüberwachungsgerät (42) zu dieser Zeit nicht arbeitet.

3. Schutzschalter nach Anspruch 1, worin die Arbeitsstromversorgung eine GS-Schaltstromversorgung umfasst; eine Spannungsstabilisierungsschaltung zwischen der GS-Schaltstromversorgung und der Reststrom-Analysen- und Vergleichsschaltung verbunden ist; die GS-Schaltstromversorgung auch eine Gleichrichterdiode, einen Sicherungswiderstand und eine Filterschaltung umfasst, worin ein Anschluss der Gleichrichterdiode mit einem L Pol der Stromversorgung verbunden ist und der andere Anschluss der Gleichrichterdiode mit einem Anschluss der Filterschaltung verbunden ist; ein Anschluss des Sicherungswiderstands mit einem N Pol der Stromversorgung verbunden ist und der andere Anschluss des Sicherungswiderstands mit der Filterschaltung verbunden ist; ein Ausgangsanschluss der Filterschaltung mit der GS-Schaltstromversorgung verbunden ist; ein Überspannungswiderstand zwischen dem L Pol der Stromversorgung und dem N Pol der Stromversorgung parallel verbunden ist; und die GS-Schaltstromversorgung einen GS/GS-Schaltstromversorgungschip umfasst, worin ein Ausgangsanschluss des GS/GS-Schaltstromversorgungschips mit der Spannungsstabilisierungsschaltung verbunden ist.

4. Schutzschalter nach Anspruch 1, worin die elektromagnetische Reststrom-Detektionsschaltung einen Kondensator C21, einen Kondensator C22, einen Widerstand R34, einen Widerstand R36, einen Widerstand R37, eine Diode D7, eine Diode D8, einen N-MOS Feldeffekttransistor Q4 und eine Steuerung P1 umfasst; ein Anschluss des Widerstands R36 mit der Anode VCC der Stromversorgung verbunden ist, und der andere Anschluss des Widerstands R36 mit einem Anschluss des Widerstands R37 und einem Gatter G des N-MOS Feldeffekttransistors Q4 verbunden ist; eine Senke D des N-MOS Feldeffekttransistors Q4 mit einem Anschluss des Widerstands R35 verbunden ist, und eine Quelle S des N-MOS Feldeffekttransistors Q4 mit dem anderen Anschluss des Widerstands R37 und dem anderen Anschluss des Widerstands R35 verbunden ist; ein Anschluss des Widerstands R35, der mit der Senke D des N-MOS Feldeffekttransistors Q4 verbunden ist, mit einem Sekundärwicklungs-Ausgangsanschluss CT1 eines elektromagnetischen Transformators des elektromagnetischen Reststromfehlerüberwachungsgeräts (42) verbunden ist; ein Anschluss des Widerstands R35, der mit der Quelle S des N-MOS Feldeffekttransistors Q4 verbunden ist, mit dem anderen Sekundärwicklungs-Ausgangsanschluss CT2 des elektromagnetischen Transformators des elektromagnetischen Reststromfehlerüberwachungsgeräts (42) verbunden ist; eine Anode der Diode D7 und eine Kathode der Diode D8 beide mit einer Anode des Kondensators C22 verbunden sind; eine Kathode der Diode D7 und eine Anode der Diode D8 beide mit einer Anode des Kondensators C21 verbunden sind; die Anode des Kondensators C22 mit der Senke D des N-MOS Feldeffekttransistors Q4 verbunden ist; die Anode des Kondensators C21 mit der Quelle S des N-MOS Feldeffekttransistors Q4 und mit GND verbunden ist; und eine Kathode des Kondensators C21 und eine Kathode des Kondensators C22 mit dem Aktuator verbunden sind.

5. Schutzschalter nach Anspruch 1, worin die elektronische Reststrom-Detektionsschaltung ein TVS Anti-Überspannungsschockschutz-Absorptionsrohr VR2, eine Triode Q1, eine Triode Q2, einen Kondensator C1, einen Kondensator C2, einen Kondensator C10, einen Kondensator C11, einen Widerstand R2, einen Widerstand R2*, einen Widerstand R3, einen Widerstand R4, einen Widerstand R5, einen Widerstand R6, einen Widerstand R10, einen Widerstand R11, einen Widerstand R12, einen Operationsverstärker U1A und einen Operationsverstärker U1B umfasst; ein Anschluss einer Wicklung des elektronischen Reststromfehlerüberwachungsgeräts (41) mit einem Ende des TVS Anti-Überspannungsschockschutz-Absorptionsrohrs VR2, einem Emitter des Transistors Q1 und einem Emitter der Triode Q2 verbunden ist; das andere Ende des TVS Anti-Überspannungsschockschutz-Absorptionsrohrs VR2 und der andere Anschluss der Wicklung des elektronischen Reststromfehlerüberwachungsgeräts (41) mit einem Anschluss des Widerstands R2 verbunden sind, der andere Anschluss des Widerstands R2 mit einer Anode des Kondensators C1 verbunden ist, und eine Kathode des Kondensators Cl mit der Kathode VSS der Stromversorgung verbunden ist; die andere Wicklung des elektronischen Transformators des elektronischen Reststromfehlerüberwachungsgeräts 41 mit einem Anschluss des Widerstands R2* und einem Anschluss des Widerstands R3 verbunden ist; das andere Ende des TVS Anti-Überspannungsschockschutz-Absorptionsrohrs VR2 mit einem Anschluss des Widerstands R2* und einem Anschluss des Widerstands R3 verbunden ist; der andere Anschluss des Widerstands R2* und ein Anschluss des Widerstands R1 mit der Anode des Kondensators C1 verbunden sind; der andere Anschluss des Widerstands R1 mit GND verbunden ist; ein Anschluss des Widerstands R3 mit dem Widerstand R2* verbunden ist; der andere Anschluss des Widerstands R3 mit einem invertierenden Eingangsanschluss des Operationsverstärkers U1A verbunden ist, und ein positiver Eingangsanschluss des Operationsverstärkers U1A mit einem Anschluss des Widerstands R4 verbunden ist; der andere Anschluss des Widerstands R4 mit GND verbunden ist; ein Ausgangsanschluss des Operationsverstärkers U1A mit einem Anschluss des Widerstands R6 verbunden ist, und der andere Anschluss des Widerstands R6 mit einer Basis der Triode Q1 und einer Basis der Triode Q2 verbunden ist; ein Kollektor der Triode Q1 mit der Anode VCC der Stromversorgung verbunden ist, und ein Kollektor der Triode Q2 mit der Kathode VSS der Stromversorgung verbunden ist; ein invertierender Eingangsanschluss des Operationsverstärkers U1B mit einem Ausgangsanschluss LD des Operationsverstärkers U1B verbunden ist; ein positiver Eingangsanschluss des Operationsverstärkers U1B mit einem Anschluss des Widerstands R12 und einem Anschluss des Kondensators C11 verbunden ist; der andere Anschluss des Kondensators C11 mit GND verbunden ist; der andere Anschluss des Widerstands R12 mit einem Anschluss des Widerstands R11 und einem Anschluss des Kondensators C10 verbunden ist; der andere Anschluss des Kondensators C10 mit einem Anschluss des Widerstands R10 und einem Anschluss des Widerstands R5 verbunden ist; der andere Anschluss des Widerstands R5 mit GND über den Widerstand R4 verbunden ist; der andere Anschluss des Widerstands R10 mit GND über den Widerstand R11 verbunden ist; und zwei Anschlüsse des Kondensators C2 parallel mit zwei Anschlüssen des Widerstands R6 verbunden sind.

6. Schutzschalter nach Anspruch 1, worin die Verarbeitungsschaltung einen Operationsverstärker U2A, einen Kondensator C12, einen Kondensator C13, einen Widerstand R13 und einen Widerstand R14 umfasst, worin ein positiver Eingangsanschluss des Operationsverstärkers U2A mit einem Anschluss des Widerstands R14 und einem Anschluss des Kondensators C13 verbunden ist; ein Ausgangsanschluss Lw des Operationsverstärkers U2A und ein Anschluss des Kondensators C12 beide mit einem invertierenden Eingangsanschluss des Operationsverstärkers U2A verbunden sind; der andere Anschluss des Widerstands 14 und der andere Anschluss des Kondensators C12 beide mit einem Anschluss des Widerstands R13 verbunden sind; der andere Anschluss des Widerstands R13 mit einem Ausgangsanschluss der elektronischen Reststrom-Detektionsschaltung verbunden ist; und der andere Anschluss des Kondensators C13 geerdet ist.

7. Schutzschalter nach Anspruch 1, worin die Vergleichsschaltung einen Operationsverstärker U3A, einen Operationsverstärker U3B, eine Diode D1, eine Diode D2, einen Widerstand R15, einen Widerstand R16, einen Widerstand R17, einen Widerstand R18 und einen Widerstand R19 umfasst; ein positiver Eingangsanschluss des Operationsverstärkers U3A geerdet ist, und ein invertierender Eingangsanschluss des Operationsverstärkers U3A mit einem Anschluss des Widerstands R15, einem Anschluss des Widerstands R16 und einer Kathode der Diode D1 verbunden ist; ein Ausgangsanschluss des Operationsverstärkers U3A mit einer Anode der Diode D1 und einer Kathode der Diode D2 verbunden ist; ein positiver Ausgangsanschluss des Operationsverstärkers U3B mit GND verbunden ist, und ein invertierender Eingangsanschluss des Operationsverstärkers U3B mit einem Anschluss des Widerstands R17, einem Anschluss des Widerstands R18 und einem Anschluss des Widerstands R19 verbunden ist; ein Ausgangsanschluss QL des Operationsverstärkers U3B mit dem anderen Anschluss des Widerstands R19 verbunden ist; eine Anode der Diode D2 und der andere Anschluss des Widerstands R16 mit dem anderen Anschluss des Widerstands R18 verbunden sind; und der andere Anschluss des Widerstands R15 und der andere Anschluss des Widerstands R17 mit einem Ausgangsanschluss der Verarbeitungsschaltung verbunden sind.

8. Schutzschalter nach Anspruch 1, worin die Treiberschaltung einen Operationsverstärker U4A, einen Operationsverstärker U4B, einen Widerstand R21, einen Widerstand R27, einen Widerstand R28, einen Widerstand R28T, einen Widerstand R29, einen Widerstand R29T, einen Widerstand R30, einen Widerstand R31, einen Widerstand R32, einen Widerstand R33, einen Widerstand R34, einen einstellbaren Widerstand VR1, einen Kondensator C20 und eine Triode Q3 umfasst; ein positiver Eingangsanschluss des Operationsverstärkers U4A mit einem Anschluss des Kondensators C16 und einem Anschluss des Widerstands R21 verbunden ist; ein Ausgangsanschluss des Operationsverstärkers U4A mit einer Anode der Diode D5 verbunden ist; der andere Anschluss des Widerstands R21 mit einem Ausgangsanschluss der Vergleichsschaltung verbunden ist; ein Anschluss des Widerstands R29T und ein Anschluss des Widerstands R29 mit der Anode VCC der Stromversorgung verbunden sind; der andere Anschluss des Widerstands R29T mit einem invertierenden Eingangsanschluss des Operationsverstärkers U4A und einem Anschluss des Widerstands R28T verbunden ist; der andere Anschluss des Widerstands R29 mit einem invertierenden Eingangsanschluss des Operationsverstärkers U4A und einem Anschluss des Widerstands R28 verbunden ist; der andere Anschluss des Widerstands R28T und der andere Anschluss des Widerstands R28 mit einem Kollektor der Triode Q3 verbunden sind; ein Emitter der Triode Q3 mit der Kathode VSS der Stromversorgung verbunden ist; ein Anschluss des Widerstands R33 mit der Anode VCC der Stromversorgung verbunden ist, und der andere Anschluss des Widerstands R33 mit einer Kathode des einstellbaren Widerstands VR1 verbunden ist; eine Anode des einstellbaren Widerstands VR1 mit einem Anschluss des Widerstands R34 und einer Basis der Triode Q3 verbunden ist; der andere Anschluss des Widerstands R34 mit der Kathode VSS der Stromversorgung verbunden ist; ein invertierender Eingangsanschluss des Operationsverstärkers U4B mit GND verbunden ist; ein Ausgangsanschluss des Operationsverstärkers U4B mit einer Anode der Diode D6 verbunden ist; eine Kathode der Diode D6 mit dem Aktuator über den Widerstand R32 verbunden ist; ein positiver Eingangsanschluss des Operationsverstärkers U4B mit einem Anschluss des Widerstands R30 verbunden ist; der andere Anschluss des Widerstands R30 mit einem Anschluss des Widerstands R27, einem Anschluss des Widerstands R31 und einem Anschluss des Kondensators C20 verbunden ist; der andere Anschluss des Widerstands R27 mit einer Kathode der Diode D5 verbunden ist; und der andere Anschluss des Widerstands R31 und der andere Anschluss des Kondensators C20 mit der Kathode VSS der Stromversorgung verbunden sind.

9. Schutzschalter nach Anspruch 6, worin die Verarbeitungsschaltung ferner eine Spannungsreferenzschaltung umfasst, die benutzt wird, wenn ein Stromnetz eine Spannung liefert; die Spannungsreferenzschaltung einen Operationsverstärker U2B, einen Widerstand R7, einen Widerstand R8, einen Kondensator C3 und einen Kondensator C4 umfasst; ein positiver Eingangsanschluss des Operationsverstärkers U2B mit einem Anschluss des Widerstands R8, einem Anschluss des Widerstands R9 und einem Anschluss des Kondensators C4 verbunden ist; ein Ausgangsanschluss des Operationsverstärkers U2B und ein Anschluss des Widerstands R7 mit einem invertierenden Ausgangsanschluss des Operationsverstärkers U2B verbunden sind; ein Anschluss des Kondensators C3 mit dem anderen Anschluss des Widerstands R7 verbunden ist und mit GND verbunden ist; der andere Anschluss des Kondensators C3 mit der Kathode VSS der Stromversorgung verbunden ist; der andere Anschluss des Widerstands R8 und der andere Anschluss des Kondensators C4 mit der Kathode VSS der Stromversorgung verbunden sind; und der andere Anschluss des Widerstands R9 mit der Anode VCC der Stromversorgung verbunden ist.

10. Schutzschalter nach Anspruch 1, worin eine Breite des Reststrom-Treibermoduls ein Drittel einer Gesamtbreite des Schutzschalters ist; und die Breite der ersten Montagenut und der zweiten Montagenut gleich ist.

11. Schutzschalter nach Anspruch 1, worin ein Phasenpol des Schutzschalters in der ersten Montagenut montiert ist; eine Neutralphase des Schutzschalters, das elektronische Reststromfehlerüberwachungsgerät (41), das elektromagnetische Reststromfehlerüberwachungsgerät (42), ein elektromagnetisches Relais (5) und ein Auslösemechanismus (6), der vom elektromagnetischen Relais (5) ausgelöst werden kann, in der zweiten Montagenut montiert sind.

12. Schutzschalter nach Anspruch 1, worin die Phasenpole des Schutzschalters beide in der ersten Montagenut und der zweiten Montagenut montiert sind; und das elektronische Reststromfehlerüberwachungsgerät (41), das elektromagnetische Reststromfehlerüberwachungsgerät (42) und das elektromagnetische Relais (5) im Reststrom-Analysen-Treibermodul (2) angeordnet sind.

13. Schutzschalter nach Anspruch 11 oder 12, worin der Phasenpol des Schutzschalters ein Paar Phasendrahtanschlüsse und eine Phasenschaltungsstruktur umfasst, die mit den Phasendrahtanschlüssen elektrisch verbunden ist; das Paar Phasendrahtanschlüsse jeweils als ein vorgelagerter Phasendrahtanschluss (31) und ein nachgelagerter Phasendrahtanschluss (32) benutzt sind und entgegengesetzt an beiden Seiten der ersten Montagenut angeordnet sind, und die Phasenschaltungsstruktur in der ersten Montagenut zwischen dem vorgelagerten Phasendrahtanschluss (31) und dem nachgelagerten Phasendrahtanschluss (32) angeordnet ist; die Phasenschaltungsstruktur einen Phasenpolenhandgriff (33), einen Phasenpolenbedienungsmechanismus (34), einen beweglichen Phasenpolenkontakt (35), einen elektromagnetischen Auslöser (36), einen thermischen Auslöser (37) und eine Lichtbogen-Auslöschkammer (38) umfasst; der Phasenpolenhandgriff (33) und der Phasenpolenbedienungsmechanismus (34) am oberen Teil der ersten Montagenut angeordnet sind; der Phasenpolenhandgriff (33) mit dem Phasenpolenbedienungsmechanismus (34) über eine Phasenpolenverbindungsstange verbunden ist; der bewegliche Phasenpolenkontakt (35) mit dem unteren Teil des Bedienungsmechanismus verbunden ist und mit dem thermischen Auslöser (37) und dem vorgelagerten Phasendrahtanschluss (31) elektrisch verbunden ist; der elektromagnetische Auslöser (36) an einer Seite des Phasenpolenbedienungsmechanismus (34) fixiert ist und unter dem Phasenpolenhandgriff (33) gelegen ist; ein statischer Phasenpolenkontakt (39), der an den beweglichen Phasenpolenkontakt (35) angepasst ist, an einer Seite des elektromagnetischen Auslösers (36) fixiert ist, die dem beweglichen Phasenpolenkontakt (35) nahe ist; der thermische Auslöser (37) unter dem Phasenpolenbedienungsmechanismus (34) angeordnet ist; und die Lichtbogen-Auslöschkammer (38) unter dem elektromagnetischen Auslöser (36) angeordnet ist.

14. Schutzschalter nach Anspruch 11, worin der Neutralpol des Schutzschalters ein Paar Neutraldrahtanschlüsse und eine Neutraldrahtschaltungsstruktur umfasst, die mit den Neutraldrahtanschlüssen elektrisch verbunden ist; das Paar Neutraldrahtanschlüsse jeweils als ein vorgelagerter Neutraldrahtanschluss (71) und ein nachgelagerter Neutraldrahtanschluss (72) benutzt werden und entgegengesetzt an beiden Seiten der zweiten Montagenut angeordnet sind, und die Neutraldrahtschaltungsstruktur in der zweiten Montagenut zwischen dem vorgelagerten Neutraldrahtanschluss (71) und dem nachgelagerten Neutraldrahtanschluss (72) angeordnet ist; die Neutraldrahtschaltungsstruktur einen Neutraldrahthandgriff (73), eine bewegliche Neutraldrahtkontaktanordnung, ein elektromagnetisches Relais (5), ein elektronisches Reststromfehlerüberwachungsgerät (41) und ein elektromagnetisches Reststromfehlerüberwachungsgerät (42) umfasst; der Neutraldrahthandgriff (73) und der Auslösemechanismus (6) am oberen Teil der zweiten Montagenut angeordnet sind; der Neutraldrahthandgriff (73) mit dem Phasenpolenhandgriff (33) gekoppelt ist und mit dem Auslösemechanismus (6) über eine Neutraldrahtverbindungsstange verbunden ist; der Auslösemechanismus (6) mit dem Phasenpolenbedienungsmechanismus (34) verbunden ist; das elektromagnetische Relais (5) an einer Seite des Auslösemechanismus (6) und unter dem Neutraldrahthandgriff (73) angeordnet ist; das elektronische Reststromfehlerüberwachungsgerät (41) und das elektromagnetische Reststromfehlerüberwachungsgerät (42) nebeneinander unter dem elektromagnetischen Relais (5) angeordnet sind; und ein statischer Neutraldrahtkontakt (76), der mit dem Mechanismus des beweglichen Neutraldrahtkontakts (74) zusammenwirkt, an einer Seite des elektronischen Reststromfehlerüberwachungsgeräts (41) und des elektromagnetischen Reststromfehlerüberwachungsgeräts (42) angeordnet ist.

## Revendications

1. Disjoncteur, comprenant un actionneur et un circuit d'analyse et de comparaison de courant résiduel pour commander l'actionneur, le circuit d'analyse et de comparaison de courant résiduel comprend un circuit électronique de détection, un circuit de détection de courant résiduel électromagnétique et un circuit de commande ;
dans lequel le circuit électronique de détection est connecté à un moniteur électronique de défaut de courant résiduel (41) pour surveiller un courant résiduel CC lisse, un courant résiduel CA sinusoïdal haute fréquence et un courant résiduel composite et comprend une alimentation électrique de travail et un circuit de détection alimenté par l'alimentation électrique de travail ; le circuit de détection comprend un circuit électronique de détection de courant résiduel, un circuit de traitement et un circuit de comparaison ; le circuit électronique de détection de courant résiduel est utilisé pour collecter un signal de défaut et convertit le signal de défaut en un signal de sortie d'échantillonnage ; le circuit de traitement est utilisé pour amplifier le signal de sortie d'échantillonnage reçu pour former un signal prétraité ; le circuit de comparaison est utilisé pour recevoir le signal de pré-traitement, comparer le signal de pré-traitement à un seuil défini, délivrer en sortie un signal de défaut et commander le circuit de commande de sorte que l'actionneur actionne le disjoncteur pour déclencher ; et le circuit de détection de courant résiduel électromagnétique est connecté à un moniteur de défaut de courant résiduel électromagnétique (42) pour surveiller un courant résiduel CA sinusoïdal et un courant CC pulsé résiduel, et oblige l'actionneur à actionner le disjoncteur pour déclencher le signal de sortie ;
le disjoncteur comprenant un boîtier isolant (1), dans lequel une plaque de séparation est disposée dans le boîtier isolant (1) et divise un espace à l'intérieur du disjoncteur en deux parties, une première rainure de montage et une seconde rainure de montage ; la première rainure de montage et la seconde rainure de montage sont utilisées pour installer un pôle de phase ou un pôle neutre du disjoncteur à l'intérieur ; un module de commande d'analyse de courant résiduel (2) qui est disposé en parallèle sur un côté du boîtier isolant (1) ; une carte de circuit imprimé de détection de courant résiduel est disposée dans le module de commande d'analyse de courant résiduel (2), et le circuit d'analyse et de comparaison de courant résiduel est disposé sur la carte de circuit imprimé de détection de courant résiduel ; et le moniteur de défaut de courant résiduel électronique (41) et le moniteur de défaut de courant résiduel électromagnétique (42) sont disposés dans le module de commande d'analyse de courant résiduel (2) ou dans la seconde rainure de montage.

2. Disjoncteur selon la revendication 1, dans lequel, dans le cas où le moniteur de défaut de courant résiduel électronique (41) n'a pas de tension d'alimentation électrique, le moniteur de défaut de courant résiduel électromagnétique (42) est utilisé pour surveiller le courant CC résiduel lisse, un courant résiduel CA sinusoïdal haute fréquence et un courant résiduel composite ; et dans le cas où le moniteur de défaut de courant résiduel électronique (41) a une tension d'alimentation électrique, le moniteur de défaut de courant résiduel électronique (41) est utilisé pour surveiller le courant résiduel CA sinusoïdal et un courant CC résiduel pulsé, et le moniteur de défaut de courant résiduel électromagnétique (42) ne fonctionne pas à ce moment.

3. Disjoncteur selon la revendication 1, dans lequel l'alimentation électrique de travail comprend une alimentation électrique à découpage CC ; un circuit de stabilisation de tension est connecté entre l'alimentation électrique à découpage CC et le circuit d'analyse et de comparaison de courant résiduel ; l'alimentation électrique à découpage CC comprend également une diode de redressement, une résistance fusible et un circuit de filtre, dans lequel une borne de la diode de redressement est connectée à un pôle L de l'alimentation électrique et l'autre borne de la diode de redressement est connectée à une borne du circuit de filtrage ; une borne de la résistance fusible est connectée à un pôle N du circuit d'alimentation, et l'autre borne de la résistance fusible est connectée au circuit de filtrage ; une borne de sortie du circuit de filtrage est connectée à l'alimentation électrique à découpage CC ; une résistance de surtension est connectée en parallèle entre le pôle L de l'alimentation électrique et le pôle N de l'alimentation électrique ; et l'alimentation électrique à découpage CC comprend une puce d'alimentation électrique à découpage CC/CC, dans lequel une borne de sortie de la puce d'alimentation électrique à découpage CC/CC est connectée au circuit de stabilisation de tension.

4. Disjoncteur selon la revendication 1, dans lequel le circuit de détection de courant résiduel électromagnétique comprend un condensateur C21, un condensateur C22, une résistance R34, une résistance R36, une résistance R37, une diode D7, une diode D8, un transistor à effet de champ N-MOS Q4 et un dispositif de commande P1 ; une borne de la résistance R36 est connectée à l'anode VCC de l'alimentation électrique, et l'autre borne de la résistance R36 est connectée à une borne de la résistance R37 et une grille G du transistor à effet de champ N-MOS Q4 ; un drain D du transistor à effet de champ N-MOS Q4 est connecté à une borne de la résistance R35, et une source S du transistor à effet de champ N-MOS Q4 est connectée à l'autre borne de la résistance R37 et à l'autre borne de la résistance R35 ; une borne de la résistance R35, qui est connectée au drain D du transistor à effet de champ N-MOS Q4, est connectée à une borne de sortie d'enroulement secondaire CT1 d'un transformateur électromagnétique du moniteur de défaut de courant résiduel électromagnétique (42) ; une borne de la résistance R35, qui est connectée à la source S du transistor à effet de champ N-MOS Q4, est connectée à l'autre borne de sortie d'enroulement secondaire CT2 du transformateur électromagnétique du moniteur de défaut de courant résiduel électromagnétique (42) ; une anode de la diode D7 et une cathode de la diode D8 sont toutes deux connectées à une anode du condensateur C22 ; une cathode de la diode D7 et une anode de la diode D8 sont toutes deux connectées à une anode du condensateur C21 ; l'anode du condensateur C22 est connectée au drain D du transistor à effet de champ N-MOS Q4 ; l'anode du condensateur C21 est connectée à la source S du transistor à effet de champ N-MOS Q4 et connectée à GND ; et une cathode du condensateur C21 et une cathode du condensateur C22 sont connectées à l'actionneur.

5. Disjoncteur selon la revendication 1, dans lequel le circuit électronique de détection de courant résiduel comprend un tube VR2 d'absorption de protection contre les chocs anti-surtensions TVS, une triode Q1, une triode Q2, un condensateur C1, un condensateur C2, un condensateur C10, un condensateur C11, une résistance R2, une résistance R2*, une résistance R3, une résistance R4, une résistance R5, une résistance R6, une résistance R10, une résistance R11, une résistance R12, un amplificateur opérationnel U1A et un amplificateur opérationnel U1B ; une borne d'un enroulement du moniteur électronique de défaut de courant résiduel (41) est connectée à une extrémité du tube VR2 d'absorption de protection contre les chocs anti-surtensions TVS, un émetteur du transistor Q1, et un émetteur de la triode Q2 ; l'autre extrémité du tube VR2 d'absorption de protection contre les chocs anti-surtensions TVS et l'autre borne de l'enroulement du moniteur électronique de défaut de courant résiduel (41) sont connectées à une borne de la résistance R2, l'autre borne de la résistance R2 est connectée à une anode du condensateur C1, et une cathode du condensateur C1 est connectée à la cathode VSS de l'alimentation électrique ; l'autre enroulement du transformateur électronique du moniteur électronique de défaut de courant résiduel 41 est connecté à une borne de la résistance R2* et à une borne de la résistance R3 ; l'autre extrémité du tube VR2 d'absorption de protection contre les chocs anti-surtensions TVS est connectée à une borne de la résistance R2* et à une borne de la résistance R3 ; l'autre borne de la résistance R2* et une borne de la résistance R1 sont connectées à l'anode du condensateur C1 ; l'autre borne de la résistance R1 est connectée à GND ; une borne de la résistance R3 est connectée à la résistance R2* ; l'autre borne de la résistance R3 est connectée à une borne d'entrée inverseuse de l'amplificateur opérationnel U1A, et une borne d'entrée positive de l'amplificateur opérationnel U1A est connectée à une borne de la résistance R4 ; l'autre borne de la résistance R4 est connectée à GND ; une borne de sortie de l'amplificateur opérationnel U1A est connectée à une borne de la résistance R6, et l'autre borne de la résistance R6 est connectée à une base de la triode Q1 et à une base de la triode Q2 ; un collecteur de la triode Q1 est connecté à l'anode VCC de l'alimentation électrique, et un collecteur de la triode Q2 est connecté à la cathode VSS de l'alimentation électrique ; une borne d'entrée inverseuse de l'amplificateur opérationnel U1B est connecté à une borne de sortie LD de l'amplificateur opérationnel U1B ; une borne d'entrée positive de l'amplificateur opérationnel U1B est connectée à une borne de la résistance R12 et à une borne du condensateur C11 ; l'autre borne du condensateur C11 est connectée à GND ; l'autre borne de la résistance R12 est connectée à une borne de la résistance R11 et à une borne du condensateur C10 ; l'autre borne du condensateur C10 est connectée à une borne de la résistance R10 et à une borne de la résistance R5 ; l'autre borne de la résistance R5 est connectée à GND par l'intermédiaire de la résistance R4 ; l'autre borne de la résistance R10 est connectée à GND par l'intermédiaire de la résistance R11 ; et deux bornes du condensateur C2 sont connectées en parallèle à deux bornes de la résistance R6.

6. Disjoncteur selon la revendication 1, dans lequel le circuit de traitement comprend un amplificateur opérationnel U2A, un condensateur C12, un condensateur C13, une résistance R13 et une résistance R14, dans lequel une borne d'entrée positive de l'amplificateur opérationnel U2A est connectée à une borne de la résistance R14 et à une borne du condensateur C13 ; une borne de sortie Lw de l'amplificateur opérationnel U2A et une borne du condensateur C12 sont toutes deux connectées à une borne d'entrée inverseuse de l'amplificateur opérationnel U2A ; l'autre borne de la résistance 14 et l'autre borne du condensateur C12 sont toutes deux connectées à une borne de la résistance R13 ; l'autre borne de la résistance R13 est connectée à une borne de sortie du circuit électronique de détection de courant résiduel ; et l'autre borne du condensateur C13 est mise à la masse.

7. Disjoncteur selon la revendication 1, dans lequel le circuit de comparaison comprend un amplificateur opérationnel U3A, un amplificateur opérationnel U3B, une diode D1, une diode D2, une résistance R15, une résistance R16, une résistance R17, une résistance R18 et une résistance R19 ; une borne d'entrée positive de l'amplificateur opérationnel U3A est mise à la masse, et une borne d'entrée inverseuse de l'amplificateur opérationnel U3A est connectée à une borne de la résistance R15, une borne de la résistance R16 et une cathode de la diode D1 ; une borne de sortie de l'amplificateur opérationnel U3A est connectée à une anode de la diode D1 et une cathode de la diode D2 ; une borne de sortie positive de l'amplificateur opérationnel U3B est connectée à GND, et une borne d'entrée inverseuse de l'amplificateur opérationnel U3B est connectée à une borne de la résistance R17, une borne de la résistance R18 et une borne de la résistance R19 ; une borne de sortie QL de l'amplificateur opérationnel U3B est connectée à l'autre borne de la résistance R19 ; une anode de la diode D2 et l'autre borne de la résistance R16 sont connectées à l'autre borne de la résistance R18 ; et l'autre borne de la résistance R15 et l'autre borne de la résistance R17 sont connectées à une borne de sortie du circuit de traitement.

8. Disjoncteur selon la revendication 1, dans lequel le circuit de commande comprend un amplificateur opérationnel U4A, un amplificateur opérationnel U4B, une résistance R21, une résistance R27, une résistance R28, une résistance R28T, une résistance R29, une résistance R29T, une résistance R30, une résistance R31, une résistance R32, une résistance R33, une résistance R34, une résistance réglable VR1, un condensateur C20 et une triode Q3 ; une borne d'entrée positive de l'amplificateur opérationnel U4A est connecté à une borne du condensateur C16 et à une borne de la résistance R21 ; une borne de sortie de l'amplificateur opérationnel U4A est connectée à une anode de la diode D5 ; l'autre borne de la résistance R21 est connectée à une borne de sortie du circuit de comparaison ; une borne de la résistance R29T et une borne de la résistance R29 sont connectées à l'anode VCC de l'alimentation électrique ; l'autre borne de la résistance R29T est connectée à une borne d'entrée inverseuse de l'amplificateur opérationnel U4A et à une borne de la résistance R28T ; l'autre borne de la résistance R29 est connectée à une borne d'entrée inverseuse de l'amplificateur opérationnel U4A et à une borne de la résistance R28 ; l'autre borne de la résistance R28T et l'autre borne de la résistance R28 sont connectées à un collecteur de la triode Q3 ; un émetteur de la triode Q3 est connecté à la cathode VSS de l'alimentation électrique ; une borne de la résistance R33 est connectée à l'anode VCC de l'alimentation électrique, et l'autre borne de la résistance R33 est connectée à une cathode de la résistance réglable VR1 ; une anode de la résistance réglable VR1 est connectée à une borne de la résistance R34 et à une base de la triode Q3 ; l'autre borne de la résistance R34 est connectée à la cathode VSS de l'alimentation électrique ; une borne d'entrée inverseuse de l'amplificateur opérationnel U4B est connectée à GND ; une borne de sortie de l'amplificateur opérationnel U4B est connectée à une anode de la diode D6 ; une cathode de la diode D6 est connectée à l'actionneur par l'intermédiaire de la résistance R32 ; une borne d'entrée positive de l'amplificateur opérationnel U4B est connectée à une borne de la résistance R30 ; l'autre borne de la résistance R30 est connectée à une borne de la résistance R27, une borne de la résistance R31 et une borne du condensateur C20 ; l'autre borne de la résistance R27 est connectée à une cathode de la diode D5 ; et l'autre borne de la résistance R31 et l'autre borne du condensateur C20 sont connectées à la cathode VSS de l'alimentation électrique.

9. Disjoncteur selon la revendication 6, dans lequel le circuit de traitement comprend en outre un circuit de référence de tension qui est utilisé lorsqu'un réseau électrique fournit une tension ; le circuit de référence de tension comprend un amplificateur opérationnel U2B, une résistance R7, une résistance R8 , un condensateur C3 et un condensateur C4 ; une borne d'entrée positive de l'amplificateur opérationnel U2B est connectée à une borne de la résistance R8, une borne de la résistance R9 et une borne du condensateur C4 ; une borne de sortie de l'amplificateur opérationnel U2B et une borne de la résistance R7 sont connectées à une borne de sortie inverseuse de l'amplificateur opérationnel U2B ; une borne du condensateur C3 est connectée à l'autre borne de la résistance R7 et connectée à GND ; l'autre borne du condensateur C3 est connectée à la cathode VSS de l'alimentation électrique ; l'autre borne de la résistance R8 et l'autre borne du condensateur C4 sont connectées à la cathode VSS de l'alimentation électrique ; et l'autre borne de la résistance R9 est connectée à l'anode VCC de l'alimentation électrique.

10. Disjoncteur selon la revendication 1, dans lequel une largeur du module de commande de courant résiduel est un tiers d'une largeur totale du disjoncteur ; et la largeur de la première rainure de montage et de la seconde rainure de montage est égale.

11. Disjoncteur selon la revendication 1, dans lequel un pôle de phase du disjoncteur est monté dans la première rainure de montage ; une phase neutre du disjoncteur, le moniteur électronique de défaut de courant résiduel (41), le moniteur de défaut de courant résiduel électromagnétique (42), un relais électromagnétique (5) et un mécanisme de déclenchement (6) qui peut être déclenché par le relais électromagnétique (5) sont montés dans la seconde rainure de montage.

12. Disjoncteur selon la revendication 1, dans lequel les pôles de phase du disjoncteur sont tous deux montés dans la première rainure de montage et la seconde rainure de montage ; et le moniteur de défaut de courant résiduel électronique (41), le moniteur de défaut de courant résiduel électromagnétique (42) et le relais électromagnétique (5) sont disposés dans le module de commande d'analyse de courant résiduel (2).

13. Disjoncteur selon la revendication 11 ou 12, dans lequel le pôle de phase du disjoncteur comprend une paire de bornes de fil de phase et une structure de circuit de phase électriquement connectée aux bornes de fil de phase ; la paire de bornes de fil de phase est respectivement utilisée comme une borne de fil de phase amont (31) et une borne de fil de phase aval (32) et sont disposées de manière opposée des deux côtés de la première rainure de montage, et la structure de circuit de phase est disposée dans la première rainure de montage entre la borne de fil de phase amont (31) et la borne de fil de phase aval (32) ; la structure de circuit de phase comprend une poignée de pôle de phase (33), un mécanisme de fonctionnement de pôle de phase (34), un contact mobile de pôle de phase (35), un déclencheur électromagnétique (36), un déclencheur thermique (37) et une chambre d'extinction d'arc (38) ; la poignée de pôle de phase (33) et le mécanisme de fonctionnement de pôle de phase (34) sont disposés sur la partie supérieure de la première rainure de montage ; la poignée de pôle de phase (33) est reliée au mécanisme de fonctionnement de pôle de phase (34) par une tige de connexion de pôle de phase ; le contact mobile de pôle de phase (35) est connecté à la partie inférieure du mécanisme de fonctionnement et est électriquement connecté au déclencheur thermique (37) et à la borne de fil de phase amont (31) ; le déclencheur électromagnétique (36) est fixé sur un côté du mécanisme d'actionnement de pôle de phase (34) et est situé en dessous de la poignée de pôle de phase (33) ; un contact statique de pôle de phase (39) adapté au contact mobile de pôle de phase (35) est fixé sur un côté du déclencheur électromagnétique (36) à proximité du contact mobile de pôle de phase (35) ; le déclencheur thermique (37) est disposé en dessous du mécanisme de fonctionnement de pôle de phase (34) ; et la chambre d'extinction d'arc (38) est disposée en dessous du déclencheur électromagnétique (36).

14. Disjoncteur selon la revendication 11, dans lequel le pôle neutre du disjoncteur comprend une paire de bornes de fil neutre et une structure de circuit de fil neutre électriquement connectées aux bornes de fil neutre ; la paire de bornes de fil neutre est respectivement utilisée comme une borne de fil neutre amont (71) et une borne de fil neutre aval (72) et sont disposées de manière opposée des deux côtés de la seconde rainure de montage, et la structure de circuit de fil neutre est disposée dans la seconde rainure de montage entre la borne de fil neutre amont (71) et la borne de fil neutre aval (72) ; la structure de circuit de fil neutre comprend une poignée de fil neutre (73), un ensemble de contact mobile de fil neutre, un relais électromagnétique (5), un moniteur de défaut de courant résiduel électronique (41) et un moniteur de défaut de courant résiduel électromagnétique (42) ; la poignée de fil neutre (73) et le mécanisme de déclenchement (6) sont disposés sur la partie supérieure de la seconde rainure de montage ; la poignée de fil neutre (73) est couplée à la poignée de pôle de phase (33) et est connectée au mécanisme de déclenchement (6) par l'intermédiaire d'une tige de connexion de fil neutre ; le mécanisme de déclenchement (6) est connecté au mécanisme de fonctionnement de pôle de phase (34) ; le relais électromagnétique (5) est disposé d'un côté du mécanisme de déclenchement (6) et en dessous de la poignée de fil neutre (73) ; le moniteur de défaut de courant résiduel électronique (41) et le moniteur de défaut de courant résiduel électromagnétique (42) sont disposés côte à côte en dessous du relais électromagnétique (5) ; et un contact statique de fil neutre (76) qui coopère avec le mécanisme de contact mobile de fil neutre (74) est disposé d'un côté du moniteur de défaut de courant résiduel électronique (41) et du moniteur de défaut de courant résiduel électromagnétique (42).
